(19) Europäisches Patentamt / European Patent Office / Office européen des brevets

(11) EP 2 563 869 B3

(12) # NEUE EUROPÄISCHE PATENTSCHRIFT

Nach dem Beschränkungsverfahren (B3-1)

(45) Hinweis auf die Patenterteilung:
**05.08.2015 Patentblatt 2015/32**

(45) Veröffentlichungstag und Bekanntmachung des Hinweises auf die Entscheidung über den Antrag auf Beschränkung:
**B3-1 16.04.2025 Patentblatt 2025/16**

(21) Anmeldenummer: **11718341.8**

(22) Anmeldetag: **29.04.2011**

(51) Internationale Patentklassifikation (IPC):
***C09D 11/101*** *(2014.01)* ***C09D 11/30*** *(2014.01)*
***C09D 11/322*** *(2014.01)*

(52) Gemeinsame Patentklassifikation (CPC):
**C09D 11/101; C09D 11/322**

(86) Internationale Anmeldenummer:
**PCT/EP2011/056874**

(87) Internationale Veröffentlichungsnummer:
**WO 2011/135089 (03.11.2011 Gazette 2011/44)**

(54) **UV-HÄRTBARE TINTE AUF ACRYLATBASIS, EIN VERFAHREN UND EINE TINTENBASIS ZU DEREN HERSTELLUNG**

UV-CURABLE ACRYLATE BASED INK, A PROCESS AND AN INK BASE FOR ITS PRODUCTION

ENCRE A BASE D'ACRYLATES UV-DURCISSABLE, UN PROCEDE ET UNE BASE D'ENCRE POUR LA PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2010 DE 102010018855**

(43) Veröffentlichungstag der Anmeldung:
**06.03.2013 Patentblatt 2013/10**

(73) Patentinhaber: **Hapa AG**
**8604 Volketswil (CH)**

(72) Erfinder: **RRAHIMI, Migjen**
**8620 Wetzikon (CH)**

(74) Vertreter: **Letzelter, Felix Phillip et al**
**Meissner Bolte Patentanwälte**
**Rechtsanwälte Partnerschaft mbB**
**Widenmayerstraße 47**
**80538 München (DE)**

(56) Entgegenhaltungen:
**EP-A1- 1 840 176**
**EP-A1- 2 017 311**
**EP-A1- 2 053 100**
**WO-A1-2004/106444**
**US-A1- 2009 018 230**

EP 2 563 869 B3

## Beschreibung

Die Erfindung betrifft eine UV-härtbare Tinte, insbesondere UV-härtbare InkJet-Tinte, auf Acrylatbasis mit einem Gehalt an Pigment(en), radikalischen Photoinitiatoren, Dispergiermittel(n) und gegebenenfalls weiteren Additiven, dadurch gekennzeichnet, dass sie mindestens zwei radikalische Photoinitiatoren vom Norrish Typ I und mindestens ein UV-härtbares Monomer in Form eines polyfunktionellen alkoxylierten und/ oder polyalkoxylierten Acrylatmonomers, das ein oder mehrere Di- und/oder Tri-Acrylate umfasst, enthält, wobei das Mol-Verhältnis aller Acrylate zu allen Initiatoren etwa 7:1 bis 19:1, insbesondere etwa 7:1 bis 15:1, beträgt, und sie eine Viskosität (gemessen mit dem Bohlin-Gerät bei 45°C) von 5 bis 15 mPa.s aufweist und wobei mindestens einer der radikalischen Photoinitiatoren des Norrish Typs I ein bifunktioneller Initiator, der zwei potentielle Spaltungsstellen enthält, ist.

Verschiedene InkJet-Tinten sind im Stand der Technik bekannt, wie solche auf Lösungsmittelbasis, auf Wasserbasis oder durch Strahlung härtbare InkJet-Tinten. Ink-Jet-Tinten auf Lösungsmittelbasis trocknen durch Verdampfen eines Lösungsmittels und enthalten daher typischerweise ein Bindemittel, ein Farbmittel und als Hauptkomponente der Bestandteile der flüssigen Phase eine Flüssigkeit mit niedrigem Siedepunkt. Das Lösungsmittel kann Wasser, ein organisches Lösungsmittel oder ein Gemisch von Lösungsmitteln mit niedrigem Siedepunkt sein, wie beispielsweise in der EP 0 314 403 A1 bzw. EP 0 424 714 A1 beschrieben. InkJet-Tinten auf Lösungsmittelbasis haben mehrere Nachteile. Einerseits sind viele Lösungsmittel nicht umweltverträglich. Andererseits müssen derartige InkJet-Tinten vor dem Aushärten trocknen, um ein gutes Druckresultat zu erzielen. Außerdem ist es aufgrund der schlechten Benetzungseigenschaften vieler Lösungsmittel für bestimmte Werkstoffe oft schwierig, damit beispielsweise verschiedene Kunststoffe, Metalle oder Ähnliches zu bedrucken.

Strahlungshärtbare InkJet-Tinten sind aus der EP 0 882 104 B1 bekannt. Derartige InkJet-Tinten enthalten 80 bis 95 Gew.-% der Gesamtzusammensetzung an polyfunktionellem alkoxyliertem und/oder polyfunktionellem polyalkoxyliertem Acrylatmonomer und mindestens einen radikalischen Photoinitiator. Ebenso bezieht sich die EP 1 593 521 auf eine strahlungshärtbare InkJet-Tinte. Diese enthält ein strahlungshärtbares Oligomer in Form ungesättigter Acrylatharze niedriger Viskosität, ein strahlungshärtbares Acrylatmonomer, ausgewählt unter polyfunktionellen alkoxylierten oder polyalkoxylierten Acrylmonomeren, die ein oder mehrere Di- oder Triacrylate umfassen, wenigstens einen radikalischen Photoinitiator und wenigstens ein oberflächenaktives Mittel. Diese InkJet-Tinte weist eine Viskosität von 0,015 Pa.s bis 0,008 Pa.s bei 40 bis 70°C und eine Oberflächenspannung von $2{,}0 \times 10^{-4}$ bis $3{,}0 \times 10^{-4}$ N/cm bei 40 bis 70°C auf. Das Verhältnis Oligomer: Monomer beträgt 1:4. Die bekannten lösungsmittelfreien Ink-Jet-Tinten des Standes der Technik benötigen eine relativ hohe Trocknungsenergie der jeweils eingesetzten UV-Strahler bzw. UV-Lampe und/oder zeigen gegenüber verschiedenen Lösungsmitteln eine geringe Wischfestigkeit.

In der EP 1 840 176 A1 werden Ink-Jet-Zusammensetzungen beschrieben, die aus N-Vinyllactam, Methacrylsäureestern und/oder -amiden mit mindestens 3 Alkylenoxid-Gruppen sowie Initiatoren als härtbare Basis bestehen. Als verwendbare Initiatoren werden unter anderem radikalische Photoinitiatoren und cationische Initiatoren genannt. Die in der EP 1 840 176 A1 beschriebenen Zusammensetzungen sollen sich durch eine gute Strahlungshärtbarkeit auszeichnen und für die Herstellung von lithographischen Druckplatten geeignet sein.

Auch die EP 2 017 331 A1 befasst sich InkJet-Tinten, die mit Hilfe von UV-Stahlung, sichtbarem Licht oder Elektronenstrahlen gehärtet werden können. Den Kern der in der EP 2 017 331 A1 beschriebenen Erfindung bildet ein Photoinitiator auf Basis von 2-Amino-2-benzyl-1-(4-morpholin-4-yl-phenyl)-propan-1-on, der sicherstellen soll, dass die Tinte vor ihrem Auftrag auf ein Substrat eine geringe Viskosität aufweist, und nach ihrem Auftrag schnell gehärtet werden kann, so dass sich ein fester Film bildet. Gemäß den Beispielen der EP 2 017 331 A1 liefert die Härtung der beschriebenen Tinten mit einer Energie von 7000 bis 9000 $J/m^2$ gehärtete Filme mit einem Bleistift-Härtegrad von HB.

Die EP 2 053 100 A1 beschreibt InkJet-Druckverfahren unter Verwendung von Strahlungs-härtbaren Primern, die einen Mindestanteil von kationisch polymerisierbaren (Meth)acrylat-Gruppen von 25 Gew.-% aufweisen. Die in dieser Anmeldung beschriebenen Primer sollen zu einer verbesserten Haftung von auf die Primer aufgebrachten Tinten auf verschiedenen Substraten führen, und werden innerhalb des Verfahrens auf das Substrat aufgebracht und gehärtet, bevor in einem zweiten Schritt eine ebenfalls härtbare Tinte auf die gehärtete Primer-Beschichtung aufgebracht wird. Darüber hinaus sind aus dem Bereich der Flexodruck-Tinten Zusammensetzungen bekannt, die neben Pigmenten polyfunktionelle alkoxylierte und polyalkoxylierte Di- und Triacrylate enthalten. So beschreibt die WO 2004/106444 A1 Tinten mit Pigmentgehalten von etwa 17 %, die Polyesteracrylate, Dipropylendiacrylat und ethoxyliertes Pentaerythrytholtetraacrylat enthalten. Für die Härtung dieser Tinten werden Photoinitiatoren verwendet.

Die US 2003/018230 A1 befasst sich mit Flexodruck- und Lithographischen Drucktinten mit gelber Farbe, die 60 bis 90 % eines Acrylbindemittels, beispielsweise auf Basis von Tripropylenglycoldiacrylat, enthalten. Die Weiterentwicklung der US 2003/018230 A1 besteht gemäß den dort gemachten Angaben in einem speziellen Gelbpigment, dass eine besonders gute Farbstärke und einen guten Glanz aufweist und zu Tinten mit geeigneten rheologischen Eigenschaften verarbeitet werden kann. Zur Härtung der in US 2003/018230 A1 beschreibenen Tinten kommen Gemische verschiedener Photoinitiatoren zum Einsatz.

Aufgabe der vorliegenden Erfindung ist es daher, lösungsmittelfreie Tinten, insbesondere InkJet-Tinten, mit

verbesserten Eigenschaften herzustellen, insbesondere eine Tintenbasis zu deren Herstellung, um die Nachteile des Standes der Technik zu vermeiden. Insbesondere zielt die Erfindung darauf ab, UV-härtbare InkJet-Tinten, insbesondere UV-härtbare InkJet-Tinten, zu entwickeln, die bei minimaler Energie auf verschiedenen Druckmedien trocknen sowie nach der Aushärtung gegenüber Aceton, Isopropanol und anderen Lösungsmitteln wischfest sind. Darüber hinaus ist es eine Aufgabe der vorliegenden Erfindung, den Anteil an teuren Photoinitiatoren in der InkJet-Tinte möglichst niedrig zu halten. Da UV-härtbare Tinten der beschriebenen Art aufgrund hochreaktiver UV-Initiatoren in Kombination mit den ungesättigten Verbindungen der funktionellen Acrylatgruppen zu vorzeitiger Alterung neigen, ist es ein besonderes Ziel der Erfindung, eine langzeitstabile Tintenbasis als Grundlage für erfindungsgemäße langzeitstabile Tinten, insbesondere InkJet-Tinten, bereitzustellen, wobei sich die gewünschten physikalischen Eigenschaften der Tintenbasis auch nach einer Temperaturerhöhung auf 60°C über einen Zeitraum von 4 Wochen nicht signifikant verändern. Dabei treten in der Viskosität, dem Speichermodul und dem Verlustmodul allenfalls unwesentliche Änderungen auf, insbesondere nicht mehr als 20%, bevorzugt nicht mehr als 10% der ursprünglich gemessenen Eigenschaftenwerte. Eine derartige Tintenbasis soll zur Herstellung von bei Raumtemperatur langzeitstabiler UV-härtbarer Tinte, insbesondere InkJet-Tinte, besonders geeignet sein.

Erfindungsgemäß wird die obige Aufgabe durch eine UV-härtbare Tinte, insbesondere InkJet-Tinte, auf Acrylatbasis mit einem Gehalt an Pigment(en), radikalischen Photoinitiatoren, Dispergiermittel(n) und gegebenenfalls weiteren Additiven gelöst, die dadurch gekennzeichnet ist, dass sie mindestens zwei radikalische Photoinitiatoren vom Norrish Typ I und mindestens ein radikalisch härtbares Monomer in Form eines polyfunktionellen alkoxylierten und/oder polyalkoxylierten Acrylatmonomers, das ein oder mehrere Di- und/oder Tri-Acrylate umfasst, enthält, wobei das Molverhältnis aller Acrylate zu allen Initiatoren etwa 7:1 bis 19:1, insbesondere etwa 7:1 bis 15:1, oder auch etwa 9:1 bis 13:1, beträgt, und sie eine Viskosität (gemessen mit dem Bohlin-Gerät bei 45°C) von 5 bis 15 mPa.s aufweist und wobei mindestens einer der radikalischen Photoinitiatoren des Norrish Typs I ein bifunktioneller Initiator, der zwei potentielle Spaltungsstellen enthält, ist.

Vorteilhafte Ausgestaltungen der UV-härtbaren Tinte gemäß der Erfindung ergeben sich aus den Unteransprüchen 2 bis 16 sowie der nachfolgenden Beschreibung.

Lösungsbestandteil der vorliegenden Erfindung ist des Weiteren ein Verfahren zur Herstellung der erfindungsgemäßen UV-härtbaren Tinte, insbesondere InkJet-Tinte. Dieses Verfahren ist dadurch gekennzeichnet, dass

**1.** ein Mahlgut bzw. eine Tintenbasis dadurch hergestellt wird, indem ein oder mehrere radikalisch härtbare Monomere in Form eines polyfunktionellen alkoxylierten und/oder polyalkoxylierten Acrylmonomers, die ein oder mehrere Di- und/oder Tri-Acrylate umfassen, Pigmente, Dispergiermittel, insbesondere zusätzlich mit Synergisten, Stabilisatoren und weiteren Additiven in einer Hochleistungsmühle, insbesondere in einer Perlenmühle, so lange gemahlen werden, bis sich eine konstante Viskosität und/oder konstante Partikelgröße eingestellt hat, und

2. das erhaltene Mahlgut mit weiteren Acrylat-Monomeren sowie den radikalischen Photoinitiatoren in Form des Norrish Typs I entsprechend der vorstehenden Definition und gegebenenfalls weiteren Additiven entsprechend den Angaben nach mindestens einem der Ansprüche 1 bis 16 gemischt wird.

Vorteilhafte Ausgestaltungen dieses Verfahrens sind wie folgt darzustellen:
Es ist von Vorteil, wenn zusätzlich ein Acrylat-Oligomer im Schritt 1 und/oder 2 hinzugegeben wird. Vorteilhaft ist es auch, wenn bei der Durchführung der Schritt 1 eine Maximaltemperatur von etwa 60°C eingehalten wird und/oder als Pigment Ruß eingesetzt wird, insbesondere mit folgenden Eigenschaften: Korngröße etwa 20 bis 70 nm, insbesondere etwa 25 bis 60 nm, pH-Wert $\leq 4$ und $\geq 3$ (nach ISO 787-9), flüchtiger Anteil (nach DIN 53552) < 5% bei 950°C, BET-Oberfläche (nach ASTM D 5816) $\geq 30$ $m^2/g$ und $\leq 90$ $m^2/g$.

Die erfindungsgemäßen UV-härtbaren Tinten können unter Verwendung einer Tintenbasis hergestellt werden, die in Form eines Mahlguts, das nach Schritt 1 des erfindungsgemäßen Verfahrens erhältlich ist, vorliegen kann. Dieses stellt ein vorteilhaftes Zwischenprodukt zur Herstellung der UV-härtbaren Tinte gemäß der Erfindung dar. In dem bezeichneten Mahlgut bzw. der Tintenbasis kann der Gehalt an Pigment, wie Ruß, 10 bis 30 Gew.-%, insbesondere 15 bis 25 Gew.-% betragen.

Ersichtlich trifft die Erfindung in ihrer allgemeinen Ausdrucksform beliebige UV-härtbare Tinten. Als bevorzugte Ausgestaltung sind jedoch hier UV-härtbare InkJet-Tinten anzusehen. Auf diese wird nachfolgend detailliert eingegangen. Dies soll nicht beschränkend sein. Die dort getroffenen Feststellungen gelten gleichermaßen für solche Tinten, die keine InkJet-Tinten darstellen. Dies sei ausdrücklich angemerkt.

Bei der praktischen Verwirklichung der Erfindung ist es, wie ersichtlich, wesentlich, dass mindestens zwei radikalische Photoinitiatoren vom Norrish-Typ I eingesetzt werden. Dies führt zwangsläufig dazu, dass sie sich in ihren Absorptionsmaxima unterscheiden. Diese mindestens zwei radikalischen Photoinitiatoren werden als Photoinitiatoren (A) einerseits und Photoinitiatoren (B) andererseits bezeichnet. Der Typ des Photoinitiators (A) weist vorzugsweise ein UV-Absorptionsmaximum in einem niedrigeren Wellenlängenbereich des UV-Bereichs auf und ist bei der UV-Härtung des Farbausdrucks, insbesondere InkJet-Ausdrucks, besonders wirksam in dessen Oberflächenbereich, während der

radikalische Photoinitiator (B), der ein höheres UV-Absorptionsmaximum aufweist, eine besondere Härtung im Inneren des Ausdrucks bewirkt. Dabei ergeben sich folgende bevorzugte Ausführungsformen:

Es ist vorteilhaft, wenn der Abstand zwischen den Absorptionsmaxima der mindestens zwei radikalischen Photoinitiatoren (A) und (B) mindestens etwa 20 nm, insbesondere mindestens etwa 35 nm, beträgt. Wenn im vorstehenden von Absorptionsmaxima die Rede ist, soll sich bei diesen insbesondere um solche Absorptionsmaxima handeln, die im Wellenlängenbereich von 210 bis 400 nm auftreten. Viele radikalische Photoinitiatoren des Norrish Typs I und II weisen im Bereich von 200 ± 10 nm ebenfalls Absorptionsmaxima auf, die jedoch im Sinne der Erfindung außer Betracht bleiben sollen. Vorzugsweise werden bei der Bestimmung der Abstandes der Absorptionsmaxima der radikalischen Photoinitiatoren (A) und (B) die im Bereich von 210 bis 400 nm auftretenden die relativen Absorptionshauptmaxima herangezogen, d.h. diejenigen Maxima die für den jeweiligen Photoinitiator im Bereich von 210 bis 400 nm die höchste Absorption aufweisen.

Unter Beachtung dieser bevorzugten Angaben ist es des Weiteren zweckmäßig, dass das Absorptionsmaximum, insbesondere das relative Absorptionshauptmaximum im Bereich von 210 bis 400 nm, des radikalischen Photoinitiators (A) unter 290 nm und des radikalischen Photoinitiators (B) über 290 nm liegt. Auch kann es als bevorzugt angegeben werden, dass das Absorptionsmaximum des radikalischen Photoinitiators (A) zwischen 210 und 280 nm, insbesondere zwischen 230 und 270 nm, und das Absorptionsmaximum des radikalischen Photoinitiators (B) zwischen 300 und 400 nm, insbesondere zwischen 310 und 370 nm, liegt. Zweckmäßig ist es, auch dem Mol-Verhältnis der beiden bezeichneten radikalischen Photoinitiatoren (A) und (B) Aufmerksamkeit zuzuwenden. Es hat sich gezeigt, dass das Mol-Verhältnis des radikalischen Photoinitiators (A) zum radikalischen Photoinitiator (B) vorzugsweise zwischen etwa 0,7:1 und 1:0,7, insbesondere bei etwa 1:1, liegt.

Es ist für den Fachmann ersichtlich, dass bei der Auswahl der erfindungsgemäßen Photoinitiatoren das von den jeweiligen UV-Strahlern emittierte Licht bedacht werden muss. Demzufolge wird bei einer gewählten Kombination des radikalischen Photoinitiators (A) und (B) ein UV-Strahler herangezogen, der hinlänglich Licht in dem Absorptionsbereich der jeweils gewählten Photoinitiatoren emittiert. Mit anderen Worten bedeutet dies, dass je nach Kombination der radikalischen Photoinitiatoren (A) und (B) ein besonders geeigneter UV-Strahler ermittelt und eingesetzt wird. Allgemein kann essich handeln um eine Quecksilber-, Eisen- oder Thallium-Lampe. Es können auch andere dem Fachmann geläufige handelsübliche UV-Strahler herangezogen werden.

Die erfindungsgemäß herangezogenen Initiatoren sind insbesondere UV-Initiatoren, die im üblichen chemischen Sinne UV-initiierte Reaktionen anderer Reaktanten, insbesondere der Acrylate, ermöglichen, auslösen und/oder beschleunigen. Vorzugsweise sind die herangezogenen Initiatoren solche des Norrish I Typs, die nach einer $\alpha$-Spaltung in Radikale zerfallen. Beispiele für solche Initiatoren sind 2-Hydroxy-1-{4-[4-(2-hydroxy-2-methyl-propionyl)-benzyl]-phenyl}-2-methyl-propan-1-on (Irgacure 127), 1-Hydroxycyclohexyl-phenyl-keton (Irgacure 184, Doublecure 184), Phenylbis 2,4,6-trimethylbenzoyl-phosphinoxid (Irgacure 819), 2-Benzyl-2-dimethylamino-1-(4-morpholino-phenyl)-butanon-1 (Irgacure 369), 2,4,6-Trimethylbenzoyl-diphenyl-phosphinoxid (Doublecure TPO, Genocure LTM), 2-Dimethylamino-2-(4-methyl-benzyl)-1-(4-’ morpholin-4-yl-phenyl)-butan-1-on(Irgacure 379), 2-Hydroxy-2-methyl-1-phenyl-propan-1-on (Darocur 1173, Genocure DHMA), 2-Hydroxy-2-methylpropriophenon (Double Cure 173), 2,2-Dimethoxy-2-phenylacetophenon (Irgacure 651) und 2-Methyl-1[4-(methylothio)phenyl]-2-morpholinopropan-1-on (Irgacure 907).

Bevorzugt ist mindestens einer der Photoinitiatoren des Norrish-Typs 1 ausgewählt aus 2-Hydroxy-1-{4-[4-(2-hydroxy-2-methyl-propionyl)-benzyl]-phenyl}-2-methyl-propan-1-on (Irgacure 127), 1-Hydroxycyclohexyl-phenyl-keton (Irgacure 184), Phenylbis 2,4,6-trimethylbenzoyl-phosphinoxid (Irgacure 819), 2-Benzyl-2-dimethylamino-1-(4-morpholino-phenyl)-butanon-1 (Irgacure 369), 2,4,6-Trimethylbenzoyl-diphenylphosphinoxid (Doublecure TPO), 2-Dimethylamino-2-(4-methyl-benzyl)-1-(4-morpholin-4-yl-phenyl)-butan-1-on (Irgacure 379). Mindestens einer der Initiatoren ist ein bifunktioneller Initiator, der zwei potentielle Spaltungsstellen enthält. Ein Beispiel für einen solchen Initiator ist das 2-Hydroxy-1-{4-[4-(2-Hydroxy-2-methyl-propionyl)-benzyl]-phenyl}-2-methyl-propan-1-on (Irgacure 127). Eine besonders schnelle Tocknung der InkJet-Tinte hat sich bei Verwendung einer der Folgenden Initiatorkombinationen gezeigt, die somit besonders bevorzugt verwendet werden:

1. 2-Hydroxy-1-{4-[4-(2-hydroxy-2-methyl-propionyl)-benzyl]-phenyl}-2-methyl-propan-1-on (Irgacure 127)/2-Dimethylamino-2-(4-methyl-benzyl)-1-(4-morpholin-4-ylphenyl)-butan-1l-on (Irgacure 379), 2. 2-Hydroxy-1-{4-[4-(2-hy-droxy-2-methyl-propionyl)-benzyl]-phenyl}-2-methyl-propan-1-on (Irgacure 127)/ Phenylbis 2,4,6-trimethylbenzoyl-phosphinoxid (Irgacure 819), 3. 2-Hydroxy-1-{4-[4-(2-hydroxy-2-methyl-propionyl)-benzyl]-phenyl}-2-methyl-propan-1-on (Irgacure 127)/ 2-Benzyl-2-dimethylamino-1-(4-morpholino-phenyl)-butanon-1 (Irgacure 369).

Zusätzlich zu den bereits genannten Initiatoren können ebenfalls Hilfsinitiatoren zugesetzt werden, die bei gemeinsamer Verwendung mit den als bevorzugt genannten Initiatoren die Aushärtung positiv unterstützen. Beispielhaft in diesem Zusammenhang zu nennen sind 2-Hydroxy-2-methyl-1-phenyl-propan-1-on (Darocur 1173, Double Cure 173 und Genocure DHMA), eine Mischung aus Diphenyl-(2,4,6-trimethylbenzoyl)-phosphinoxid und Methylbenzoylformat (75/25 Double Cure TPO-L), Trimethylbenzoyldiphenylphosphinoxid (Genocure LTM), sowie eine Mischung aus 1-Hydroxycyclohexyl-phenylketon und Benzophenon (Genocure LEC).

Im Zusammenhang mit der vorliegenden Erfindung können auch Initatoren des Norrish Typs II verwendet

werden, die nach Anregung die Polymerisation nach dem H-Abstraktionsmechanismus starten. Wird ein solcher Initiator zusätzlich verwendet, darf er jedoch nur in geringen Mengen von bis zu 40 Gew.-%, bezogen auf das Gesamtgewicht aller Initiatoren, vorzugsweise bis zu 30 Gew.-% eingesetzt werden. Beispiele für Initiatoren des Norrish Typs II sind 4,4'-Bis(diethylamino) benzophenon (Double Cure EMK), 2-Ethylhexyl 4-methylamino-benzoat (Genocure EHA), Isopropylthioxanthon (Genocure ITX), Ethyl-4-Dimethylaminobenzoat (Genocure EPD) und 4-Phenylbenzophenon (Genocure PBZ).

Das Gewichtsverhältnis der Summe aller Acrylate, die im folgenden ausführlich beschrieben werden, zum Gewichtsverhältnis der Summe aller Initiatoren liegt zweckmäßigerweise im Bereich von etwa 5:1 bis 19:1, insbesondere etwa 7:1 bis 15:1, und besonders bevorzugt zwischen 9:1 und 13:1, wobei:

$$\Sigma n_{j\ Acrylat} = n_{Acrylat\ 1} + n_{Acrylat\ 2} + \ldots n_{Acrylat\ j}$$

$$\Sigma n_{i\ Initiator} = n_{Initiator\ 1} + n_{Initiator\ 2} + \ldots n_{Initiator\ i}$$

n = Mol in [mmol]
$15 \geq j \geq 2$ $10 \geq i \geq 2$ und
mindestens zwei Initiatoren vom Norrish Typ I sind.

Im Rahmen der Erfindung sind an die Auswahl der Acrylatmonomere keine besonderen Anforderungen zu stellen. Es hat sich als zweckmäßig erwiesen, wenn solche radikalisch härtbaren Acrylmonomeren eingesetzt werden, bei denen mehrere Acrylatgruppen an ein Grundmolekül gebunden sind. Solche Acrylatmonomere werden im Fachgebrauch auch als polyfunktionelle Acrylate bezeichnet. Einfache Beispiele für solche polyfunktionellen Acrylatmonomere sind unter anderem Trimethylolpropantriacrylat oder Dipentaerytrolhexaacrylat. Besonders bevorzugt weisen die Acrylatmonomere ebenfalls Alkylenglycoluntereinheiten oder Polyalkylenglycoluntereinheiten auf, über die die Acrylatreste mit dem Grundmolekül verbunden sind. Solche Acrylatmonomere werden auch als alkoxylierte oder polyalkoxylierte Acrylatmonomere bezeichnet. Beispiele für polyfunktionelle alkoxylierte oder polyalkoxylierte Acrylatmonomere sind ethoxyliertes Trimethylolpropantriacrylat (Miramer 3130, Rahn AG), Dipropylenglycoldiacrylat (Miramer 222, Rahn AG) oder Bisphenol A 30 Mol ethoxyliertes Dimethylacrylat (Miramer 2301, Rahn AG). Das Grundmolekül kann andererseits auch vollständig aus einem Polyalkylenglycol bestehen, so z.B. aus Polyethylenglycol oder Polypropylenglycol. Ein einfaches Beispiel für ein solches Monomer ist Polyethylenglycol 400 diacrylat (Miramer 280, Rahn AG).

Neben den polyfunktionellen Acrylaten können darüber hinaus monofunktionelle Acrylate verwendet werden, die ebenfalls alkoxyliert und/oder polyalkoxyliert sein können. Einfache Beispiele für nichtalkoxylierte und/oder polyalkoxylierte Acrylatmonomere sind das Laurylacrylat (Miramer 120 der Firma Rahn AG) und das Isodecylacrylat (Miramer 130 der Firma Rahn AG). Beispiele für ein alkoxyliertes oder polyalkoxylierte Acrylatmonomer sind Ethylene- glycolphenyletheracyrlat (Miramer 140, Rahn AG) sowie ethoxyliertes Nonylphenolacrylat (Miramer M1602, M164 oder M166, Rahn AG). Eine ausführliche Liste der verwendbaren Acrylatmonomeren mit Handelsnahmen der Firma Rahn AG mit Namen und Strukturformeln findet sich nachfolgend in Anlage 1 (Liste der verwendeten Monomeren).

Das Verhältnis von monofunktionellen zu polyfunktionellen Acrylaten unterliegt ebenfalls keinen besonderen Anforderungen. Es hat sich als zweckmäßig erwiesen, dass das polyfunktionelle Acrylat mindestens in einer Menge von etwa 5%, bezogen auf die Gesamtmenge (nach Gewicht) an Acrylaten, eingesetzt wird. Bevorzugt liegt das Verhältnis von monofunktionellen Acrylaten zu polyfunktionellen Acrylaten im Bereich von 95 zu 5 bis 0,1 zu 99,5.

Zusätzlich zu poly- und monofunktionellen Acrylatmonomeren können polyfunktionelle Acrylate verwendet werden, bei denen die Acrylatgruppen an ein oligomeres Grundmolekül (backbone) gebunden sind, das seinerseits aus einer sich n-fach wiederholenden Abfolge eines polymerisierten Monomers besteht. Solche Acrylate werden im Folgenden als "radikalisch härtbare Oligomere" bezeichnet. Bevorzugte Beispiele dafür sind Polyetheracrylate, wie das bereits erwähnte Polyethylenglycol 400 Diacrylat, aber daneben auch Epoxy(meth)acrylate, Polyester(meth)acrylate, Urethan(meth)acrylate sowie acrylierte Oligoamide. (meth) bedeutet in diesem Zusammenhang, dass es sich sowohl um Acrylate als auch um Methacrylate sowie um Gemische davon handeln kann. Im Rahmen der vorliegenden Erfindung werden insbesondere Polyetheracrylate herangezogen, insbesondere von der Firma Rahn AG mit der Handelsbezeichnung Genomer 3364 und Genomer 3497. Bei Einsatz eines radikalisch härtbaren Oligomers werden auf einen Gewichtsteil radikalisch härtbares Oligomer zweckmäßigerweise etwa 10 bis 100 Gewichtsteile Acrylmonomer eingesetzt, insbesondere etwa 3 bis 50 Gewichtsteile.

Die Farbstoffträger der erfindungsgemäßen UV-härtbaren InkJet-Tinte stellen insbesondere Pigmente dar. Zwingender Bestandteil ist demzufolge mindestensein Pigment. In Einzelfälleln kann es jedoch vorteilhaftsein, zusätzlich einen Farbstoff heranzuziehen.

Im vorliegenden Fall sind insbesondere spezielle Rußpartikel, wie sie nachfolgend noch detailliert beschrieben werden, für die Zwecke der Erfindung besonders geeignet. Die Rußpartikel weisen zweckmäßig mindestens eine der

folgenden Eigenschaften auf: eine Korngröße von mindestens 30 nm, besonders bevorzugt 30 bis 60 nm, eine Ölabsorption im Bereich von < 100 cc/100 g, vorzugsweise ≤ 60 ml/100 g, und insbesondere bevorzugt ≤ 50 ml/100 g, eine Oberfläche nach ASTM D5816 von ≤ 90 $m^2$/g, besonders bevorzugt ≤ 70 $m^2$/g, und besonders bevorzugt ≤ 50 $m^2$/g, einen pH-Wert von zwischen 3 und 4 sowie einen flüchtigen Anteil bis 950°C von ≤ 5%, bevorzugt ≤ 2,5%, auf. Für derartige Rußpartikel hat es sich gezeigt, dass die Viskosität der InkJet-Tinte bzw. das durch das erfindungsgemäße Verfahren hergestellte Mahlgut sich auch bei längerer Lagerung und höherer Temperatur nicht signifikant verändert. Besonders stabile Tinten lassen sich mit Rußpigmenten herstellen, die alle der oben genannten Eigenschaften erfüllen. Ganz allgemein kann bemerkt werden, dass Ruße, die nach dem Furnace Black-Verfahren mit kontrollierter Oxidation hergestellt werden, besonders für ein entsprechendes Mahlgut geeignet sind. Beispiele für erfindungsgemäß geeignete Rußpigmente sind die Pigmente Special Black 250, Special Black 350 (vertrieben von der Fa. Evonik) und Special Black 100.

Neben Ruß können auch farbige Pigmente eingesetzt werden, insbesondere solche auf Basis von Quinacridonen, Isoindolinen, Isoindolinonen, Phthalocyaninen und Benzimidazolonen. Diese Pigmente weisen zweckmäßigerweise Korngrößen von zwischen etwa 20 und etwa 150 nm auf, bevorzugt zwischen etwa 40 und etwa 120 nm. Die Ölabsorption nach DIN 53601 ist zweckmäßigerweise größer als 40 ml/100 g. Die Oberfläche beträgt vorzugsweise mehr als 25 $m^2$/g (bestimmt nach ASTM D5816).

Die erfindungsgemäß herangezogenen Dispergiermittel dienen der Dispergierung des jeweils eingesetzten Pigments bzw. der Pigmente im später erörterten Mahlgut bzw. der fertigen erfindungsgemäßen UV-härtbaren InkJet-Tinte. Sie dienen auch dazu, die Anziehung der einzelnen Pigmentteilchen zueinander zu reduzieren. Insbesondere handelt es sich um Dispergiermittel auf Basis langkettiger Polymere. Beispiele für Dispergiermittel, die im Rahmen der Erfindung besonders geeignet sind, stellen Solsperse® 24000, Solsperse® 39000, Solsperse® 35000, Solsperse® 32000, Solsperse® 76400 der Firma Lubrizol dar.

Die erfindungsgemäß eingesetzten Synergisten dienen insbesondere dazu, die Wechselwirkung zwischen dem Dispergiermittel und der Pigmentoberfläche zu erhöhen und so die Dispergierleistung des Dispergiermittels zu unterstützen. Insbesondere werden erfindungsgemäß Synergisten in Form von Solsperse® 5000, Solsperse® 12000 sowie Solsperse® 22000 der Firma Lubrizol herangezogen.

Das Verhältnis von Dispergiermittel zu Synergist liegt zweckmäßig zwischen 10:1 und 2:1, bevorzugt zwischen 8:1 und 5:1.

Im Rahmen der vorliegenden Erfindung können der InkJet-Tinte zweckmäßigerweise auch Stabilisatoren zugesetzt werden. Dabei handelt es sich insbesondere um langkettige Acrylate, die die Aktivierungsenergie der Tintenbasis erhöhen und somit beispielsweise ein vorzeitiges Aushärten einer UV-Aktivierung verhindern. Ein in diesem Zusammenhang besonders vorteilhaft zu verwendender Stabilisator ist das Glycerolpropoxylat (1PO/OH)triacrylat, das unter dem Handelsnamen Genorad 16 (Firma Rahn AG) vertrieben wird.

Neben den bereits erwähnten Bestandteilen der UV-härtbaren InkJet-Tinten können darüber hinaus Additive zugesetzt werden, wie sie gewöhnlich in InkJet-Tinten zum Einsatz kommen. Als Beispiele für solche Additive seien Lichtstabilisatoren, die unerwünschte UV-Strahlung ausschalten, die das Erscheinungsbild des gedruckten Bildes verändern können, tixotrope Mittel, Benetzungsmittel, Schäumungsmittel, Antischäumungsmittel, Fließmittel, Wachse, Öl, Bindemittel, organische und/oder anorganische Füllstoffe und/oder antistatische Mittel vorgesetzt werden.

In einer bevorzugten Ausführungsform der erfindungsgemäßen InkJet-Tinte beträgt der Gehalt an radikalisch härtbarem Oligomer etwa 0 bis 15%, der Gehalt an mono-und polyfunktionellem Monomer etwa 60 bis 85 Gew.-%, der Gehalt an Pigment etwa 3 bis 5%, der Gehalt an Photoinitiator etwa 6 bis 12 Gew.-% und die Gesamtmenge weiterer Additive etwa 1 bis 8 Gew.-%.

Die aus den oben genannten Komponenten bestehenden UV-härtbaren Ink-Jet-Tinten weisen vorzugsweise eine Viskosität (gemessen mit dem Bohlin-Gerät bei 45°C) von 5 bis 15 mPa.s, insbesondere von 7 bis 12 mPa.s, und besonders zwischen 10 und 11 mPa.s, auf. Darüber hinaus haben die UV-härtbaren InkJet-Tinten eine Oberflächenspannung (Ring) zwischen etwa 20 und 35 mN/mm, insbesondere zwischen 20 und 26 mN/mm.

Die UV-härtbare InkJet-Tinte gemäß der Erfindung ist vorzugsweise lösungsmittelfrei. In Einzelfällen kann es jedoch möglich sein, bis zu 10 Gew.-% Lösungsmittel, vorzugsweise weniger als 5 Gew.-%, und insbesondere weniger als 1,5 Gew.-% eines ausgewählten Lösungsmittels einzubeziehen. Hierbei kann es sich beispielsweise um Alkohole, wie Ethanol, Ketone, wie Aceton, Ester, wie Ethylacetat, Ether und dergleichen handeln. Es gilt als bevorzugte Regel, Lösungsmittel möglichst weitgehend auszuschließen, weil diese durch das Verdampfen beim InkJet-Druck in die Umwelt gelangen können.

Die erfindungsgemäße UV-härtbare InkJet-Tinte ist nicht auf die Verwendung einer bestimmten Strahlungsart beschränkt. Die Aushärtung kann beispielsweise durch Elektronenstrahlen oder auch durch UV-Strahlen erfolgen. Hierbei absorbiert der radikalische Photoinitiator die Strahlungsenergie, wodurch die Polymerisationsreaktion einleitet wird. Die ursprünglich niedrigviskose Zusammensetzung wird dann in eine ausgehärtete feste Masse überführt. Dadurch entsteht beispielsweise ein Schriftzug oder ein Bild, das sich durch eine überraschend günstige Dauerhaftigkeit, thermische Stabilität und Lichtstabilität auszeichnet und zudem noch, was einen besonderen Vorteil darstellt, wischfest

ist.

Als Lampen können Quecksilber-dotierte UV-Lampen mit einstellbarer Strahlungsleistung verwendet werden, alternativ jedoch auch Eisen, Thallium oder anders dotierte Dampflampen.

Die angesprochenen Ausgangsmaterialien der erfindungsgemäßen InkJet-Tinte werden zunächst vorzugsweise dem erfindungsgemäßen Verfahren unterzogen. Das danach im Schritt 1 erhaltene Mahlgut ist eine vorteilhafte Tintenbasis für die erfindungsgemäße InkJet-Tinte. Diese kann als Vorlage zur Herstellung der UV-härtbaren InkJet-Tinte gemäß der Erfindung durch Zumischen der radikalischen Photoinitiatoren sowie gegebenenfalls weiterer Acrylatmonomeren, wie sie vorstehend beschrieben sind, herangezogen werden.

Zu den besonders vorteilhaften Ausgestaltungen des erfindungsgemäßen Verfahrens:
Der Zeitpunkt der Zugabe eines Acrylatoligomers ist nicht entscheidend. So kann das Acrylatmonomer im Schritt 1 und/oder im Schritt 2 hinzugegeben werden. Bei der Herstellung des Mahlguts im Schritt 1 ist zweckmäßigerweise ein Verhältnis von Dispergiermittel zu Synergist derartig einzustellen, dass auf 100 Gewichtsteile Dispergiermittel bis zu etwa 80 Gewichtsteile Synergist entfallen, insbesondere etwa 11 bis 26 Gewichtsteile Synergist.

Die Temperatur des Mahlgutes während des Mahlschrittes ist ebenfalls nicht in besonderer Weise eingeschränkt, es sollte jedoch zweckmäßigerweise während des Mahlens im Schritt 1 eine Maximaltemperatur von etwa 60°C eingehalten werden, vorzugsweise von etwa 50°C. Weiterhin ist es zweckmäßig, den Mahlvorgang im Schritt 1 abzubrechen, sobald ein Viskositätsanstieg des Mahlguts beobachtet wird, da dies eine beginnende Polymerisation der Acrylatmonomeren und/oder Oligomeren anzeigt. Der Mahlvorgang kann prinzipiell in unterschiedlichen Mahlvorrichtungen durchgeführt werden. Jedoch hat es sich als vorteilhaft erwiesen, für den Mahlvorgang eine Kugelmühle, insbesondere unter Verwendung von Zirconoxidkugeln, einzusetzen.

Für die Tintenbasis können dieselben Bestandteile, wie sie vorstehend für die InkJet-Tinte beschrieben sind, verwendet werden, allerdings mit der Maßgabe, dass die Tintenbasis keine Initiatoren enthält. Insbesondere können dieselben radikalisch härtbaren Acrylatmonomere und -oligomere, Pigmente, Dispergiermittel, Synergisten, Stabilisatoren und weitere Additive, wie sie vorstehend beschrieben sind, eingesetzt werden. Allerdings liegt die Konzentration des Pigmentes im Mahlgut deutlich höher als bei den beschriebenen InkJet-Tinten: So wird in der Regel ein Gehalt des Pigments von zwischen 10 und 30 Gew.-%, vorzugsweise zwischen 15 und 25 Gew.-%, eingesetzt. Der Gehalt an Monomeracrylat liegt in der Tintenbasis zweckmäßigerweise zwischen 30 und 70 Gew.-%, bevorzugt zwischen 40 und 65 Gew.-%, und besonders bevorzugt zwischen 45 und 55 Gew.-%. Wird neben dem Monomeracrylat auch ein Oligomeracrylat eingesetzt, so liegt dessen Gehalt zweckmäßigerweise zwischen 10 und 30 Gew.-%, vorzugsweise zwischen 15 und 25, und besonders bevorzugt zwischen 20 und 24 Gew.-%. Der Gehalt an Dispergiermittel liegt vorzugsweise zwischen 1 und 10 Gew.-%, besonders bevorzugt zwischen 2 und 6 Gew.-%. Die Menge an Synergist beträgt hingegen vorzugsweise zwischen 0,1 und 2 Gew.-%, besonders bevorzugt zwischen 0,4 und 1,2 Gew.-%.

Die besonderen Vorteile der erfindungsgemäßen UV-härtbaren InkJet-Tinte lassen sich kurz wie folgt zusammenfassen: Die erfindungsgemäßen InkJet-Tinte zeichnen sich dadurch aus, dass sie bei minimaler Energie auf verschiedenen Druckmedien trocknen und nach der Aushärtung gegenüber beispielsweise Aceton, Isopropanol und anderen vergleichbaren Lösungsmitteln wischfest sind. Dabei kann der Anteil an teuren Photoinitatoren niedrig gehalten werden. Sie sind langzeitig stabil, wobei sich die gewünschten physikalischen Eigenschaften der Tintenbasis bei Temperaturerhöhung auf 60°C über einen Zeitraum von vier Wochen nicht signifikant ändern. Zu diesen Eigenschaften zählen Viskosität, das Speichermodul und der Verlustmodul. Die ursprünglich gemessenen Eigenschaftswerteverändern sich insbesondere nicht um mehr als 20 % und regelmäßig nicht um mehr als 10 %. Mit der Tintenbasis, anhand derer die erfindungsgemäße InkJet-Tinte hergestellt werden kann, lässt sich eine bei Raumtemperatur langzeitstabile und UV-härtbare InkJet-Tinte herstellen.

Bei der Lagerung der erfindungsgemäßen UV-härtbaren Tinte, insbesondere UV-härtbaren InkJet-Tinte, hat es sich gezeigt, dass eine Lagerung unter Sauerstoff von großem Vorteil ist. Sauerstoff ist ein Inhibitor für die Polymerisation, woraus eine Verlängerung der Lagerzeit der erfindungsgemäßen Tinte resultiert. Die verbesserte Lagerungsbeständigkeit der UV-härtbaren Tinten unter Sauerstoff ist ein wesentlicher Vorteil. Derzeit ist es aufgrund der Reaktivität ähnlicher Mischungen üblich, diese unter Inertgas zu lagern, sprich die Luft aus der Verpackung durch beispielsweise Stickstoff, Argon oder Ähnliches zu ersetzen. Demgegenüber wird im Rahmen der vorliegenden Erfindung eine Tinte offenbart, die Sauerstoff zu einem Prozentsatz gelöst hat, der einem bei einer Atmosphäre oder bei Verpackungen üblichen leichten Unter-/Überdruck (letzter bevorzugt) eingestellten Partialdruck von über 8 % (beispielsweise Stickstoff + 8 % Sauerstoff), vorzugsweise über 21 % (beispielsweise Luft) und insbesondere über 60 % (beispielsweise 60 % Sauerstoff und 40 % Inertgas oder Luft + entsprechender 02-Zumischung) entspricht. Alternativ könnte ein entsprechendes Lagern / Verpacken nach Herstellung der erfindungsgemäßen Tinte oder die entsprechend verpackte erfindungsgemäße Tinte in dem hier empfohlenen Rahmen fallen.

Nachfolgend soll die Erfindung anhand von Beispielen noch näher erläutert werden. Dabeiwerden verschiedene Testverfahren angesprochen, mit denen nachgewiesen wird, welche kennzeichnenden Merkmale der Erfindung von besonderer Bedeutung sind.

Beispiel 1: (Herstellung einer Härtungsmischung und Testverfahren)

Zur Ermittlung des Trocknungsverhaltens wurden zunächst unterschiedliche Tintenbasen, also Acrylatmischungen ohne Zusatz von Pigment hergestellt und anschließend unterschiedliche Initiatorkombinationen zugemischt. Diese Initiatorlösungen wurden anschließend unter UV-Licht getrocknet. Damit konnten die Tests schneller durchgeführt werden als mit fertigen InkJet-Tintenmischungen, in denen die Pigmentanteile des/der Farbstoffe einen erheblichen Teil der eingebrachten Energie adsorbieren und somit längere Trocknungszeiten bzw. höhere Trocknungsenergien notwendig sind. Die Trocknung erfolgte mit einem Fusion UV-Strahlersystem UV F300S oder LH6 der Firma Fusion UV-Systems unter Verwendung einer quecksilberdotierten Lampe mit einstellbarer Strahlungsleistung. Zur Messung der Strahlungsleistung auf Probenebene wurde ein UV Power Puck II Gerät der Firma EIT Instrument Markets Group verwendet.

Im Folgenden werden die Details der Herstellung und Ergebnisse des Testverfahrens sowie der fertigen InkJet-Tinten an Hand von Tabellen und Figuren beispielhaft besprochen. Die einzelnen Tabellen geben dabei einen Überblick zu:

| | | | | | |
|---|---|---|---|---|---|
| Tabelle 1 | den verwendeten Initiatoren | Tabelle | 8 | Versuch | 6 |
| Tabelle 2 | den verwendeten Acrylatlösungen | Tabelle | 9 | Versuch | 7 |
| Tabelle 3 | Versuch 1 | Tabelle | 10 | Versuch | 8 |
| Tabelle 4 | Versuch 2 | Tabelle | 11 | Versuch | 9 |
| Tabelle 5 | Versuch 3 | Tabelle | 12 | Versuch | 10 |
| Tabelle 6 | Versuch 4 | Tabelle | 13 | Versuch | 11 |
| Tabelle 7 | Versuch 5 | Tabelle | 14 | Versuch | 12 |

Die einzelnen Figuren zeigen dabei wie folgt:

| | |
|---|---|
| Figur 1 | die Ergebnisse zu Versuch 1 |
| Figur 2 | einen Überblick über die Ergebnisse der erfindungsgemäßen Versuche 1 bis 8 |
| Figur 3 | einen Überblick über die Ergebnisse der nicht erfindungsgemäßen Versuche 9 bis 12 |
| Figur 4 | die benötigte Trocknungsenergie bei fertigen InkJet-Tinten |

Insgesamt wurden 26 Photoinitiatoren in diversen Kombinationen bzw. Konzentrationen getestet. Chemische Namen und Strukturformeln der verwendeten und in Tabelle 1 unter ihren Handelsnamen geführten Photoinitiatoren werden im Anlage 2, Photoinitiatoren angeführt.

Tabelle 2 gibt einen Überblick der für die Tests verwendeten Acrylatmischungen 1 bis 4. Zu chemischer Bezeichnung und Struktur der Acrylate siehe oben und Anlage 1. Analog dazu wurden auch Acrylatmischungen gemäß den in Tabelle 16 offenbarten Mischungen getestet und unter den unten näher beschriebenen Randbedingungen, insbesondere bezüglich der Herstellung und Verwendung von Initiatorenlösung, als geeignet gefunden.

Wie in der Tabelle 3 im Detail ausgeführt, wurden für die Versuchsreihe 1 eine Reihe von unterschiedlichen Lösungen durch Zugabe von zwei Photoinitiatoren des Norrish Typs I, nämlich Irgacure 127 und Irgacure 379, in jeweils unterschiedlichen Verhältnissen und/oder unterschiedlichen Konzentrationen, zu einer konstanten Vorlage der aus Tabelle 2 bekannten Acrylatmischung 1 hergestellt. Jede Lösung wurde mit einer 12 $\mu$m Rakel auf eine Aluminiumfolie gebracht und so lange mit der UV-Lampe bestrahlt, bis sie berührungstrocken war. Die dabei ermittelten Trocknungsenergien sind in Tabelle 3 angeführt und wurden in Figur 1 graphisch dargestellt. Dazu wurde die Trocknungsenergie in mJ $cm^{-2}$ gegen das auf der Abszisse angeführte molare Verhältnis von Acrylaten zu UV-Initiatoren aufgetragen.

Analog wurde bei den Versuchen 2 bis 8 (Figur 2) sowie den Vergleichsversuchen 9 bis 12 (Figur 3) vorgegangen. Die Menge und Art der jeweils verwendeten Acrylatmischung aus Tabelle 2, Menge und Typ der jeweiligen Photoinitiatoren, sowie das Acrylat/Photoinitiatorverhältnis und die für die jeweilige Lösung benötigte Trocknungsenergie werden für die Versuche in den Tabellen 4 bis 10, für die Vergleichsversuche in den Tabellen 11 bis 14 angeführt.

Überraschenderweise hat sich bei hier nicht näher dargestellten Vorversuchen gezeigt, dass bei Verwendung eines einzelnen Photoinitiators keine zufriedenstellenden Ergebnisse erzielt werden konnten. So wurde bei Versuchen mit nur einem Photoinitiator festgestellt, dass entweder die aufgedruckte Tinte nur an der Oberfläche gehärtet war oder die Tinte nur im Innern gehärtet, an ihrer Oberfläche aber noch feucht war. Erst bei Verwendung einer Kombination von zumindest zwei Photoinitiatoren konnten Ergebnisse erzielt werden, die eine schnelle Trocknung auch bei Einsatz geringer Initiatormengen ermöglichte.

Ähnliches giltauch für Acrylatmischungen, wonach ein schnelleres Trocknungsergebnis erst bei einer Mischung von mindesten 2 unterschiedlichen Acrylaten erzielt werden konnte.

Gute Ergebnisse, d.h. eine schnelle Trocknung der InkJet-Tinte mit einem Einsatz von Trocknungsenergie der kleiner als 200, insbesondere kleiner als 150 mJ $cm^{-2}$ ist, wurden dabei mit Lösungen in einem Bereich eines Acrylat zu Initiatorverhältnisses zwischen 7 und 17, insbesondere in einem Bereich zwischen 9 und 15 gefunden.

Eine langsame Trocknung wurde hingegen bei den Versuchen 9 bis 12 beobachtet, wie anhand der in Figur 3 dargestellten Ergebnisse zu diesen Versuchen erkennbar ist. Die für diese Versuche benötigten Trocknungsenergien liegen stets über 300 $mJcm^{-2}$, was bei einerfertigen UV-härtbaren InkJet-Tinte zu langen Trocknungszeiten führen würde.

Beispiel 2: (Herstellung von UV-härtbaren InkJet-Tinten)

Für die Herstellung von InkJet-Tinten wurden verschiedene besonders gut geeignete Lösungen ausgewählt und durch Zusetzen eines pigmenthaltigen Mahlguts in Anteilen zwischen 5 und 20 Gewichtsprozent zu den fertigen InkJet-Tinten gemischt. Bevorzugt wird dabei ein Mahlgut verwendet, dass Acrylate wie sie in der jeweiligen Lösung vorkommen enthält, oder zumindest Acrylate, die mit den in der Lösung verwendeten Acrylaten verträglich sind, d.h. insbesondere nicht chemisch reagieren. Beispielsweise können neben den in vorliegender Tabelle 2 offenbarten Acrylatmischungen auch Acrylatmischungen wie die in der "Erfindungsmeldung-Mahlgut" in Tabelle B offenbarten Mischungen verwendet werden.

Eine Auswahl der entsprechenden Trocknungsversuche mit fertigen UV-härtbaren InkJet-Tinten ist in Figur 4 dargestellt. An Hand der Darstellung der Trocknungsenergie gegenüber dem Pigmentgehalt, in diesem Falle Ruß, ist zu erkennen, dass in dem Bereich einer für eine UV-härtbaren InkJet-Tinte typischen Pigmentkonzentration zwischen 1 und 6%, auch bei hohem Pigmentzusatz die Trocknungsenergie nicht über 300 mJ $cm^{-2}$ steigt, was einem sehr geringen Wert entspricht.

Im Besonderen wurden zur Herstellung der InkJet-Tinten folgende Lösungen verwendet:
Lösung 1.8, Lösung 3.5, Lösung, 4.5, Lösung 5.6, Lösung 7.6, Lösung 8.5. Die jeweils verwendeten Photoinitiatoren und Acrylatmischungen sind aus den entsprechenden Tabellen 3, 5 bis 7, 9 und 10 zu entnehmen. Diese Lösungen bestehen alle aus einer Kombination von mindestens 2 Initiatoren, die bei UV-Anregung durch $\alpha$-Spaltung in Radikale zerfallen (Norrish Typ I). Das Molverhältnis der Acrylatmischung zur Summe der Initiatoren wurde zwischen 7 und 11 eingestellt.

Beispiel 3 (Herstellung und Test des Mahlguts)

Verschiedene Tintenbasisdispersionen wurden jeweils in einer Dispermat SL-C Kugelmühle unter Verwendung von Zirkonoxidkugeln mit einem Durchmesser zwischen 1.0 bis 1.1 mm solange ohne die Mischung zu überhitzen, daher unter der Polymerisationstemperatur der Acrylate, gemahlen, bis der erwünschte Homogenisierungsgrad bzw. Teilchengröße eingestellt waren. Bevorzugt wird dazu eine mittlere Korngröße < 200 nm $D_{50}$, insbesondere < 150 nm $D_{50}$ eingestellt. Eine Einstellung der Korngröße unter < 100 nm $D_{50}$ bringt keine weiteren Vorteile. Zu beachten ist dabei, dass Pigmentpartikel in Dispersionen in der Regel stark aggregieren, so dass Partikelgrößen im Bereich der Herstellerangaben nicht erreicht werden. Vielmehr sind die Partikelgrößen innerhalb eines Mahlgutes wesentlich größer als die Herstellerangabe, können aber durch den Mahlvorgang zu kleineren mittleren Korngrößen verschoben werden.

Um die Langzeitstabilität des Mahlguts in Bezug auf verschiedene physikalische Eigenschaften zu prüfen, wurden verschiedene Testverfahren für UV-härtende InkJet-Tinten entwickelt. Ein Indikator für eine stabile Tintenbasis ist die Viskosität und damit verbundene Parameter, die über einen längeren Zeitraum stabil bleiben müssen. Für Standardmahlgutmischungen wird die Zusammensetzung so optimiert, dass das Mahlgut nach Mahlvorgang und Dispersion auch nach zweiwöchiger Lagerung bei einer auf 50°C erhöhten Temperatur stabil bleibt ($\pm$ 5% Abweichung der physikalischen Daten). Solche Tests genügen jedoch nicht den Anforderungen an UV-härtbare InkJet-Tinten, die über noch längere Zeit, beispielsweise über ein Jahr, lagerfähig sein sollen. Daher wurden Ansätze unter Verwendung verschiedener Rußsorten und unterschiedlicher Dispergiermitteln gemischt, zu fertigem Mahlgut gemahlen und anschließend einem vierwöchigen Langzeitlagertest bei einer auf 60°C erhöhten Temperatur unterzogen. Die physikalischen Daten wurden vor und nach den Lagerversuchen gemessen um das beständigste Mahlgut für eine stabile Dispersion zu ermitteln.

Oszillationsversuche: Bei den mit einem Rotationsviskosimeter mit Kegel gegen Platte Geometrie durchgeführten Versuchen wurden zeitlich instationäre Scherbedingungen vorgegeben und mit der geräteeigenen Software ausgewertet. Für alle Versuche wurde ein Rheometer der Firma Bohlin verwendet

Folgende für das Druckverhalten in InkJet-Druckköpfen wesentlichen Eigenschaften wurden bestimmt:
Speichermodul G', mit der Einheit [Pa] (englisch: storage modulus)

Der G'-Wert gilt als Maß für die während des Scherprozesses im Probenmaterial gespeicherten Deformationsenergie. Diese Energie steht nach der Entlastung vollständig zur Verfügung und wirktals Triebfederder Rückdeformation, welche die vorhergehende Deformation teilweise oder vollkommen ausgleicht. Substanzen, welche die Deformationsenergie vollkommen speichern, zeigen vollkommen reversibles Deformationsverhalten; sie liegen nach einem Belastungs-/Entlastungs-Zyklus in unveränderter Form vor. Durch G' wird also das elastische Verhalten der Messprobe repräsentiert.

Verlustmodul G", mit der Einheit [Pa] (englisch: loss modulus)

Der G"-Wert gilt als Maß für die während des Scherprozesses im Probenmaterial verbrauchte und danach für die Messprobe verlorene Deformationsenergie. Diese Energie wird bei der Veränderung der Probenstruktur aufgebraucht und/oder an die Umgebung abgegeben, z. B. wenn die Messprobe teilweise oder vollständig fließt. Fließen und auch viskoelastisches Fließen heißt: Es treten Relativbewegungen zwischen den Molekülen, Partikeln, oder größeren Teilen, z. B. "Domänen" oder Kristallen, der Überstruktur auf; dies führt zu Reibungskräften zwischen diesen Komponenten, wobei Reibungswärme erzeugt wird. Bei diesem Reibungsprozess wird Energie verbraucht, diese wird in Form von Wärme an die Umgebung abgegeben. Ein Teil dieser Energie kann beispielsweise das Probenmaterial erhitzen, und ein anderer Teil geht möglicherweise durch Erwärmung der Umgebung verloren.

Substanzen, die beim Scherprozess Energie verlieren, zeigen irreversibles Deformationsverhalten; sie liegen nach einem Belastungs-/Entlastungs-Zyklus in veränderter Form vor. Durch G" wird also das viskose Verhalten der Messprobe repräsentiert.

Verlustfaktor oder Dämpfungsfaktor tanδ mit der Einheit [1] (englisch: loss oder damping factor); Definition: tanδ = G"/G'

Der Verlustfaktor wird als Quotient der verlorenen und der gespeicherten Deformationsenergie berechnet. Er gibt also das Verhältnis zwischen dem viskosen und dem elastischen Anteil des viskoelastischen Deformationsverhaltens an. Es gilt stets:

$$0 \leq \tan\delta \leq \infty \text{ (da } 0° \leq \delta \leq 90°\text{)}$$

Idealelastisches Verhalten wird ausgedrückt durch δ = 0° mit tanδ = 0, da hier G' vollständig über G" dominiert. Bei idealviskosem Verhalten ist δ = 90° mit. tanδ = ∞, da hier G" vollständig über G' dominiert.

Wenn sich das viskose und das elastische Verhalten genau die Waage halten (d.h. G' = G"), ist δ = 45° und tanδ = 1. Das Erreichen dieses sogenannten Sol-/Gel-Übergangspunktes ist ein wichtiges Auswertekriterium bei GelBildung und Aushärteprozessen.

Zusammenfassend gilt:

Im Flüssig-Zustand ("Sol-Zustand") gilt: tanδ > 1 (da G" > G')
Im Gel-Zustand (fester Zustand) gilt: tanδ < 1 (da G' > G")
Am Sol-/Gel-Übergangspunkt gilt: tanδ = 1 (da G' = G")

Für die Versuche wurde ein Mahlgutansatz von 500 g durch Mischen der einzelnen Positionen mit Ausnahme des Pigments & des Synergisten für 10 bis 20 min. mit einem Mischer (beispielsweise Dissolver) vermengt. Anschließend wurde der Synergist bei Bedarf unter Erwärmen für 10 bis 40 min zugemischt und gerührt bis die Lösung homogen wird. Abschließend wurde das Pigment portionsweise dazugeben und weitere 20 bis 40 min. gerührt.

Zum Mischen der fertigen InkJet-Tinte wird das Mahlgut vorgelegt und die übrigen Bestandteile der InkJet-Tinte hinzugemischt.

Beispiele zum Mahlgut bzw. der Tintenbasis (Herstellung und Bewertung)

Im Folgenden werden die Ausgangsmischungen der für das Mahlgut verwendeten Komponenten an Hand der Beispiele in Tabellen 15 und 16 sowie der Figuren 5 bis 9 beschrieben. Anschließend wird das Mahlgut einem Mahlvorgang, wie vorstehend beschrieben, unterzogen. Die physikalischen Eigenschaften der verwendeten Rußtypen sind in Tabelle 14 angegeben.

Die in Tabelle 16 angeführten Vergleichsversuche B13 bis B41 zeigen die Problematik einer mangelhaften Langzeitstabilität verschiedener Mahlgutmischungen des Standes der Technik. Bereits nach 2-wöchiger Lagerung bei einer Temperatur von 50°C kommt es zu einem teils extremen Anstieg der Viskosität und durchwegs zu einer so starken Agglomeration, bzw. zu einem Verklumpen der festen Anteile, dass eine Messung der Partikelgröße nicht mehr möglich ist.

Mahlgutmischungen, die ein Dispergiermittel-zu-Synergist-Verhältnis in einem bevorzugten engen Bereich zwischen 5:1 und 8:1 aufweisen, zeigen ein exzellentes Langzeitverhalten. Solche erfindungsgemäßen Mischungen werden in Tabelle 17 aufgeführt. Prinzipiell konnten jedoch auch vergleichbar gute Ergebnisse bei Einstellung eines D/H-Verhältnis zwischen 2:1 und 10:1 erzielt werden. In diesem Fall wurde jeweils ein Dispergiermittel, nämlich Solsperse 3900, sowie ein Synergist, nämlich Solsperse 5000 verwendet. Alle drei Mischungen zeigen für Standardlagerversuche

bei 50°C nach zwei Wochen eine gute Stabilität der physikalischen Daten, d.h. eine Abweichung der Viskosität von unter 10%, sowie eine Abweichung der Teilchengröße von unter 30%. Nach 4-wöchiger Lagerung bei 60°C zeigt sich jedoch auch hier eine unterschiedliche Qualität. So stieg bei Versuch B7 die Viskosität auf fast 140% des ursprünglichen Wertes, was zu Problemen beim InkJet-Drucken führen kann, wohingegen die bei den Versuchen B71 und B261 gemessenen Abweichungen bezüglich der zu erwartenden Änderung der Druckqualität vernachlässigbar sind. Auffallend ist jedoch, dass bei Versuch B261 gegenüber Versuch B71 lediglich durch die Verwendung eines unterschiedlichen Pigments, nämlich Spezial Schwarz statt Regal 250R, und einer um 25% geringeren Dosierung des Dispergiermittels nochmals eine deutliche Verbesserung der Langzeitstabilität des Mahlguts möglich ist.

Die Figuren 5 bis 9 zeigen jeweils den Verlauf der oben erläuterten Parameter Speichermodul G' und Verlustmodul G" in Pascal, tan $\delta$ in Grad sowie Viskosität $\eta$ in Pascal Sekunden in Abhängigkeit von der Frequenz. Die Figuren zeigen im Einzelnen:

- Figur 5 ein für UV-härtbare InkJet-Tinten nicht geeignetes Mahlgut (B41) vor der Lagerung;
- Figur 6 ein für UV-härtbare InkJet-Tinten nicht geeignetes Mahlgut (B41) nach vierwöchiger Lagerung;
- Figur 7 ein für UV-härtbare InkJet-Tinten nur bedingt geeignetes Mahlgut (B7) vor und nach vierwöchiger Lagerung;
- Figur 8 ein für UV-härtbare InkJet-Tinten geeignetes Mahlgut (B261) vor und nach der Lagerung;
- Figur 9 ein weiteres für UV-härtbare InkJet-Tinten geeignetes Mahlgut (B71) vor und nach der Lagerung.

Fig. 5 zeigt am Vergleichsbeispiel B41 ein Mahlgut, das unmittelbar nach dem Mahlen Eigenschaften aufweist, die für den Einsatz als Mahlgut für UV-härtbare InkJet-Tinten zunächst brauchbar erscheinen. D.h. Der Speichermodul G' schwankt im Messbereich nicht mehr als ca.100 $\mu$Pa, der Verlustmodul G" zeigt einen im Wesentlichen linearen Anstieg von tiefen zu hohen Frequenzwerten über den gesamten Messbereich, während die Viskosität $\eta'$ sowie die komplexe Viskosität $\eta^*$ über den gesamten Messbereich im Wesentlichen konstant bleiben. Auf Grund des im Verhältnis zum Speichermodul G" sehr kleinem Verlustmodul G' ist die Änderung des Dämpfungsfaktors $\delta$ im Wesentlichen nur vom Speichermodul abhängig.

In Figur 6 ist am selben Vergleichsbeispiel B41 das völlig unterschiedliche Verhalten des Mahlguts nach 4-wöchiger Lagerung unter Verschluss bei einer Temperatur von 50°C dargestellt. Auf Grund des stark schwankenden und teilweise tixotropen Verhaltens ist dieses Mahlgut für UV-härtbare InkJet-Tinten nicht mehr geeignet. Die Viskosität sowie $\delta°$ sind sehr stark bewegungsabhängig. In diesem Fall schwankt die Viskosität des Mahlguts (grüne Kurve) bei Oszillationsfrequenzen unter 100 mHz so stark, dass ein Wechsel des Aggregatzustandes eintritt, was an Schwankung der durch # gekennzeichneten Kurve des Delta Wertes erkennbar ist. Dabei bedeute $\delta° \approx 90°$ ein rein flüssiges Verhalten, während $\delta° \approx 70°$ bereits auf ein gelartiges Verhalten hinweist. Auch der Speicher- und Verlustmodul zeigen im genannten Bereich sehr starke Schwankungen.

Demgegenüber zeigt der in Figur 7 dargestellt Kurvenverlauf des Mahlgutes B7 nach dem Mahlprozess nur geringe Schwankungen für Viskosität- und Deltawerte. Erst auf dem im selben Diagramm dargestellten Kurvenverlauf der Messung, nach einer Auslagerung von vier Wochen bei Raumtemperatur, ist ersichtlich, dass das Mahlgut bei tiefen Frequenzen ein wenn auch weniger ausgeprägtes schwankendes Verhalten der Viskosität und des Deltawertes zeigt, was ebenfalls die Tintenstabilität negativ beeinflussen kann.

Figur 8 zeigtden Kurvenverlauf des für UV-härtbare InkJet-Tinten geeigneten Mahlguts B261 nach dem Mahlen, das sich durch in einem breiten Frequenzbereich weitgehend konstante Viskositäts- und Deltawerte auszeichnet. Die Mischung zeigt in diesem Bereich stets das Verhalten einer Flüssigkeit. Auch hier wird dem Verlauf desfrischen Mahlgutes noch zusätzlich der Verlauf des Mahlgutes nach vier Wochen Auslagerung bei 60°C überlagert. Überraschenderweise sind die überlagerten Kurven nahezu identisch. Dieses Mahlgut bleibt langfristig (> 1 Jahr) sehr stabil. Weiters wurde für diesen Versuch das Pigment Special Black 250 mit einer, gegenüber den in Tabelle B verwendeten Rußsorten, gröberen durchschnittlichen Korngröße und dementsprechend kleineren spezifischen Oberfläche, d.h. 46 $m^2/g$ bzw. kleinerem Öladsorptionsvermögen, nämlich 44 ml/g, verwendet.

In Figur 9 wird eine analoge Überlagerung des Kurvenverlaufs von frischem und ausgelagertem Mahlgut, wie in Figuren 3 und 4, für das Mahlgutes B71 dargestellt. Auch diese Rezeptur mit einem gegenüber Rezeptur B261 um 33% erhöhten Anteil des Dispergiermittels Solsperse 39000 zeigt ein langzeitstabiles Verhalten. Auch der hier verwendete Ruß Regal 250 zeigt ähnliche Eigenschaften wie Special Black 250.

Tabelle 1

| (Photoinitiatoren) | | | | |
|---|---|---|---|---|
| Getestete Initiatoren | Firma | | Getestete Initiatoren | Firma |
| Irgacure 127[1] | Ciba | | Genocure DMHA[1] | Rahn |

(fortgesetzt)

| (Photoinitiatoren) | | | | |
|---|---|---|---|---|
| Getestete Initiatoren | Firma | | Getestete Initiatoren | Firma |
| Irgacure 184[1] | Ciba | | Genocure CPK[1] | Rahn |
| Irgacure 360[1] | Ciba | | Genocure EHA[2] | Rahn |
| Irgagure 369[1] | Ciba | | Genocure EPD[2] | Rahn |
| Irgacure 379[1] | Ciba | | Genocure ITX[2] | Rahn |
| Irgacure 651[1] | Ciba | | Genocure LBC[1+2] | Rahn |
| Irgacure 754[2] | Ciba | | Genocure LTM[1] | Rahn |
| Irgacure 819[1] | Ciba | | Genocure PBZ[2] | Rahn |
| Irgacure 907[1] | Ciba | | Genocure TPO[1] | Rahn |
| Irgacure 2022[1] | Ciba | | Double cure EMK[2] | DBC |
| Irgacure 2100[1] | Ciba | | Double cure 184[1] | DBC |
| Irgacure 2959[1] | Ciba | | Double cure 173[1] | DBC |
| Darocur 1173[1] | Ciba | | DoubleCure TPO[1] | DBC |
| | | | Doublecure TPO-L[1+2] | DBC |
| (Anmerkungen: [1] Initiator des Norrish Typs I, [2] Initiator des Norrish Typs II, [1+2] Mischung von Initiatoren des Norrish Typs I und II; Bezeichnet sind hier die Handelsbezeichnungen der diese vertreibenden Firma (Ciba Geigy und Rahn). Hierzu sei auf die folgende Anlage 2 verwiesen.) | | | | |

Tabelle 2

| (Acrylatmischungen) | | | | | |
|---|---|---|---|---|---|
| | Molgewicht | Mischung 1 | Mischung 2 | Mischung 3 | Mischung 4 |
| | [g/mol] | [mmol] | [mmol] | [mmol] | [mmol] |
| Genorad 16 (Stabilisator) | 240 | 0.28 | 0.28 | 0.28 | 0.28 |
| Miramer M222[2] | 242 | | | 84.53 | 77.21 |
| Miramer M216[2] | 328 | 6.81 | 2.71 | | |
| Miramer M120[3] | 240 | 2.78 | 77.22 | 10.2 | |
| Miramer M600[1] | 578 | 0.62 | | | 2.93 |
| Miramer M3130[1] | 428 | | | | 14.80 |
| Miramer 280[2] | 508 | | 6.83 | | |
| Miramer 300[2] | 296 | 76.30 | | | |
| Miramer 2301[2] | 1678 | | 0.58 | | |
| Miramer 100[3] | 344 | | 7.1 | | |
| Miramer 130[4] | 212 | 14.60 | 7.7 | | |
| Miramer 140[4] | 192 | | | 6.81 | |
| Miramer 164[4] | 450 | | | | 0.61 |
| Miramer 166[4] | 626 | | | 0.63 | |
| Miramer 220[2] | 300 | | | | 6.81 |
| Genomer 3364 | unbekannt | | | | (2 g) |
| Genomer 3497 | unbekannt | | | (2 g) | |
| Zwischentotal in mmol | | 101.39 | 102.42 | 102.52 | 102.64 |

(fortgesetzt)

| (Acrylatmischungen) | | | | | |
|---|---|---|---|---|---|
| | Molgewicht | Mischung 1 | Mischung 2 | Mischung 3 | Mischung 4 |
| | [g/mol] | [mmol] | [mmol] | [mmol] | [mmol] |
| Anmerkungen:<br>1 polyfunktionelles Acrylatmonomer (die erste Ziffer gibt die Funktionalität an)<br>2 polyfunktionelles alkoxyliertes oder polyalkoxyliertes Acrylatmonomer (die erste Ziffer gibt die Funktionalität an)<br>3 monofunktionelles Acrylatmonomer<br>4 monofunktionelles alkoxyliertes oder polyalkoxyliertes Acrylatmonomer | | | | | |

Die eingesetzten Acrylate sind in der Anlage 1 im Einzelnen mit ihren Strukturformeln dargestellt. Das Genorad 16 stellt einen aus zwei Verbindungen bestehenden Stabilisator dar. Die entsprechenden Formeln sind im Folgenden dargestellt:

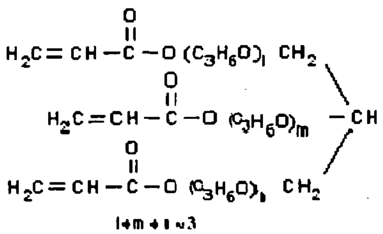

+

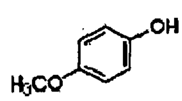

Glycerol propoxylate (1PO/OH) triacrylate (240.3 g.mol$^{-1}$)

4-methoxy-phenol (124.1 g.mol$^{-1}$)

Die Genomere 3364 und 3597 sind Acrylat-Oligomere, (keine detaillierten Angaben des Herstelers erhältlich). Dabei ist Genomer 3364 ein Polyetheracrylat mit 3 funktionellen Gruppen und Genomer 3497 ein Polyetheracrylat mit 4 funktionellen Gruppen.

Tabelle 3

| (Verwendete Photoinitiatoren/Verhältnis Mischung:Initiator) | | | | | | | | | |
|---|---|---|---|---|---|---|---|---|---|
| | Versuch 1 | | | | | | | | |
| | Lösung 1.1 | Lösung 1.2 | Lösung 1.3 | Lösung 1.4 | Lösung 1.5 | Lösung 1.6 | Lösung 1.7 | Lösung 1.8 | Lösung 1.9 |
| Irgacure 127 [mmol] | 1.82 | 3.67 | 4.00 | 4.47 | 5.29 | 4.85 | 6.17 | 5.35 | 6.17 |
| Irgacure 379 [mmol] | 1.63 | 3.29 | 3.55 | 3.94 | 3.29 | 4.42 | 3.29 | 4.94 | 5.18 |
| Initiator Summe [mmol] | 3.45 | 6.96 | 7.54 | 8.41 | 8.57 | 9.26 | 9.45 | 10.28 | 11.35 |
| Mischung 1 [mmol] | 101.39 | 101.39 | 101.39 | 101.39 | 101.39 | 101.39 | 101.39 | 101.39 | 101.39 |
| Verhältnis: Mischung 1 : Photoinitiator [mmol:mmol] | 29.38 | 14.57 | 13.44 | 12.06 | 11.83 | 10.95 | 10.72 | 9.86 | 8.94 |
| Minimale Trocknungsenergie [mJ/cm-2] | 400 | 65 | 42 | 42 | 40 | 40 | 40 | 20 | 25 |

Tabelle 4

| (Verwendete Photoinitiatoren und Verhältnis Mischung:Photoinitiator) | | | | | | |
|---|---|---|---|---|---|---|
| | Versuch 2 | | | | | |
| | Lösung 2.1 | Lösung 2.2 | Lösung 2.3 | Lösung 2.4 | Lösung 2.5 | Lösung 2.6 |
| Irgacure 127 [mmol] | 1.54 | 2.44 | 2.60 | 1.87 | 3.24 | 5.79 |
| Double Cure EMK [mmol] | 1.80 | 2.83 | 2.73 | 1.01 | 3.38 | 4.00 |
| Irgacure 379 [mmol] | 1.02 | 1.53 | 1.78 | 1.98 | - | 2.04 |
| Irgacure 2100 [mmol] | 1.08 | 1.33 | 1.89 | 1.92 | - | - |
| Irgacure 184 [mmol] | 1.30 | - | - | 1.88 | 2.08 | - |
| Irgacure 819 [mmol] | 0.60 | - | - | 1.30 | 2.20 | - |
| Initiator Summe [mmol] | 7.34 | 8.13 | 9.00 | 9.96 | 10.90 | 11.83 |
| Mischung 1 [mmol] | 101.39 | 101.39 | 101.39 | 101.39 | 101.39 | 101.39 |
| Verhältnis: Mischung 1 : Photoinitiator [mmol:mmol] | 13.81 | 12.48 | 11.26 | 10.18 | 9.30 | 8.57 |
| Minimale Trocknungsenergie [mJ/cm$^2$] | 135 | 125 | 115 | 95 | 90 | 100 |

Tabelle 5

| (Verwendete Photoinitiatoren und Verhältnis Mischung:Photoinitiator) | | | | | | |
|---|---|---|---|---|---|---|
| | Versuch 3 | | | | | |
| | Lösung 3.1 | Lösung 3.2 | Lösung 3.3 | Lösung 3.4 | Lösung 3.5 | Lösung 3.6 |
| Irgacure 379 [mmol] | 3.26 | 3.60 | 3.97 | 4.57 | 4.86 | 5.23 |
| Irqacure 819 [mmol] | 2.89 | 3.23 | 3.61 | 4.04 | 4.35 | 4.85 |
| Initiator Summe [mmol] | 6.15 | 6.83 | 7.58 | 8.61 | 9.21 | 10.08 |
| Mischung 1 [mmol] | 101.39 | 101.39 | 101.39 | 101.39 | 101.39 | 101.39 |
| Verhältnis: Mischung 1 : Photoinitiator [mmol:mmol] | 16.49 | 14.85 | 13.38 | 11.77 | 11.01 | 10.06 |
| Minimale Trocknungsenergie [mJ/cm$^2$] | 90 | 70 | 30 | 30 | 30 | 35 |

Tabelle 6

| (Verwendete Photoinitiatoren und Verhältnis Mischung:Photoinitiator) | | | | | | |
|---|---|---|---|---|---|---|
| | Versuch 4 | | | | | |
| | Lösung 4.1 | Lösung 4.2 | Lösung 4.3 | Lösung 4.4 | Lösung 4.5 | Lösung 4.6 |
| Irgacure 127 [mmol] | 3.55 | 3.99 | 4.49 | 4.84 | 5.25 | 5.72 |
| Irgacure 369 [mmol] | 3.38 | 3.71 | 4.17 | 4.52 | 4.93 | 5.32 |
| Initiator Summe [mmol] | 6.94 | 7.71 | 8.67 | 9.38 | 10.20 | 11.05 |
| Mischung 2 [mmol] | 102.42 | 102.42 | 102.42 | 102.42 | 102.42 | 102.42 |
| Verhältnis: Mischung 2 : Photoinitiator [mmol:mmol] | 14.76 | 13.29 | 11.81 | 10.92 | 10.04 | 9.27 |

(fortgesetzt)

| (Verwendete Photoinitiatoren und Verhältnis Mischung:Photoinitiator) | | | | | | |
|---|---|---|---|---|---|---|
| | Versuch 4 | | | | | |
| | Lösung 4.1 | Lösung 4.2 | Lösung 4.3 | Lösung 4.4 | Lösung 4.5 | Lösung 4.6 |
| Minimale Trocknungsenergie [mJ/cm²] | 60 | 40 | 33 | 33 | 20 | 33 |

Tabelle 7 (Referenz)

| (Verwendete Photoinitiatoren und Verhältnis Mischung:Photoinitiator) | | | | | | |
|---|---|---|---|---|---|---|
| | Versuch 5 | | | | | |
| | Lösung 5.1 | Lösung 5.2 | Lösung 5.3 | Lösung 5.4 | Lösung 5.5 | Lösung 5.6 |
| Irgacure 379 [mmol] | 3.23 | 3.63 | 3.94 | 4.34 | 4.73 | 5.18 |
| Genocure TPO [mmol] | 3.50 | 3.96 | 4.31 | 4.74 | 5.19 | 5.68 |
| Initiator Summe [mmol] | 6.73 | 7.59 | 8.25 | 9.07 | 9.92 | 10.86 |
| Mischung 2 [mmol] | 102.42 | 102.42 | 102.42 | 102.42 | 102.42 | 102.42 |
| Verhältnis: Mischung 2 : Photoinitiator [mmol:mmol] | 15.21 | 13.50 | 12.42 | 11.29 | 10.32 | 9.43 |
| Minimale Trocknungsenergie [mJ/cm²] | 240 | 185 | 100 | 60 | 25 | 25 |

Tabelle 8 (Referenz)

| (Verwendete Photoinitiatoren und Verhältnis Mischung:Photoinitiator) | | | | | | | |
|---|---|---|---|---|---|---|---|
| | Versuch 6 | | | | | | |
| | Lösung 6.1 | Lösung 6.2 | Lösung 6.3 | Lösung 6.4 | Lösung 6.5 | Lösung 6.6 | Lösung 6.7 |
| Irgacure 369 [mmol] | 3.33 | 3.68 | 4.15 | 4.69 | 5.02 | 5.38 | 5.95 |
| Irgacure 2100 [mmol] | 2.92 | 3.19 | 3.63 | 4.13 | 4.37 | 4.66 | 5.07 |
| Initiator Summe [mmol] | 6.24 | 6.88 | 7.78 | 8.83 | 9.39 | 10.03 | 11.01 |
| Mischung 3 [mmol] | 102.52 | 102.52 | 102.52 | 102.52 | 102.52 | 102.52 | 102.52 |
| Verhältnis: Mischung 3 : Photoinitiator [mmol:mmol] | 16.42 | 14.90 | 13.18 | 11.61 | 10.91 | 10.22 | 9.31 |
| Minimale Trocknungsenergie [mJ/cm²] | 120 | 50 | 50 | 30 | 30 | 30 | 30 |

Tabelle 9

| (Verwendete Photoinitiatoren und Verhältnis Mischung:Photoinitiator) | | | | | | |
|---|---|---|---|---|---|---|
| | Versuch 7 | | | | | |
| | Lösung 7.1 | Lösung 7.2 | Lösung 7.3 | Lösung 7.4 | Lösung 7.5 | Lösung 7.6 |
| Irgacure 379 [mmol] | 2.03 | 2.38 | 2.03 | 0.89 | 1.19 | 3.23 |
| Irgacure 2100 [mmol] | 1.62 | 2.61 | 1.64 | 0.92 | 0.61 | 2.94 |
| Irgacure 127 [mmol] | 1.2 | 0.85 | 1.2 | 2.34 | 2.04 | |

(fortgesetzt)

| (Verwendete Photoinitiatoren und Verhältnis Mischung:Photoinitiator) | | | | | | |
|---|---|---|---|---|---|---|
| | Versuch 7 | | | | | |
| | Lösung 7.1 | Lösung 7.2 | Lösung 7.3 | Lösung 7.4 | Lösung 7.5 | Lösung 7.6 |
| Irgacure 184 [mmol] | 1.32 | 0.33 | 1.3 | 2.02 | 2.33 | |
| Initiator Summe [mmol] | 6.17 | 6.85 | 7.80 | 8.58 | 9.34 | 10.04 |
| Mischung 3 [mmol] | 102.52 | 102.52 | 102.52 | 102.52 | 102.52 | 102.52 |
| Verhältnis: Mischung 3 : Photoinitiator [mmol:mmol] | 16.61 | 14.96 | 13.15 | 11.95 | 10.98 | 10.22 |
| Minimale Trocknungsenergie [mJ/cm$^2$] | 142 | 120 | 60 | 40 | 40 | 40 |

Tabelle 10

| (Verwendete Photoinitiatoren und Verhältnis Mischung:Photoinitiator) | | | | | | |
|---|---|---|---|---|---|---|
| | Versuch 8 | | | | | |
| | Lösung 8.1 | Lösung 8.2 | Lösung 8.3 | Lösung 8.4 | Lösung 8.5 | Lösung 8.6 |
| Irgacure 184 [mmol] | 6.22 | 3.20 | 6.03 | 4.03 | 9.35 | 10.08 |
| Irgacure 369 [mmol] | 1.16 | 3.60 | 2.00 | 4.49 | 4.99 | 4.78 |
| Irgacure 127 [mmol] | 2.10 | 3.41 | 4.15 | 4.34 | - | - |
| Initiator Summe [mmol] | 9.48 | 10.21 | 12.18 | 12.86 | 14.34 | 14.86 |
| Mischunq 4 [mmol] | 102.64 | 102.64 | 102.64 | 102.64 | 102.64 | 102.64 |
| Verhältnis: Mischung 4 : Photoinitiator [mmol:mmol] | 10.83 | 10.05 | 8.43 | 7.98 | 7.16 | 6.91 |
| Minimale Trocknungsenergie [mJ/cm$^2$] | 185 | 160 | 90 | 80 | 30 | 40 |

Tabelle 11

| (Verwendete Photoinitiatoren und Verhältnis Mischung: Photoinitiator) | | |
|---|---|---|
| | Versuch 9 | |
| | Lösung 9.1 | Lösung 9.2 |
| Gencoure EHA [mmol] | 5.34 | 6.49 |
| Double cure EMK [mmol] | 4.56 | 5.55 |
| Initiator Summe [mmol] | 9.90 | 12.04 |
| Mischung 1 [mmol] | 101.39 | 101.39 |
| Verhältnis: Mischung 1 : Photoinitiator [mmol:mmol] | 10.34 | 8.51 |
| Minimale Trocknungsenergie [mJ/cm$^2$] | 500 | 400 |

Tabelle 12

| (Verwendete Photoinitiatoren und Verhältnis Mischung:Photoinitiator) | |
|---|---|
| | Versuch 10 |
| | Lösung 10.1 |
| Genocure 2959 [mmol] | 7.13 |
| Genocure ITX [mmol] | 5.94 |
| Initiator Summe [mmol] | 13.07 |
| Mischunq 1 [mmol] | 101.39 |
| Verhältnis: Mischung 1 : Photoinitiator [mmol:mmol] | 7.83 |
| Minimale Trocknungsenergie [mJ/cm$^2$] | 500 |

Tabelle 13

| (Verwendete Photoinitiatoren und Verhältnis Mischung:Photoinitiator) | |
|---|---|
| | Versuch 11 |
| | Lösung 12.1 |
| Irgacure 2100 [mmol] | 3.73 |
| Genocure ITX [mmol] | 6.02 |
| Initiator Summe [mmol] | 9.75 |
| Mischung 1 [mmol] | 101.39 |
| Verhältnis: Mischung 1 : Photoinitiator [mmol:mmol] | 10.50 |
| Minimale Trocknungsenergie [mJ/cm$^2$] | 500 |

Tabelle 14

| (Verwendete Photoinitiatoren und Verhältnis Mischung:Photoinitiator) | |
|---|---|
| | Versuch 12 |
| | Lösung 12.1 |
| Irgacure 127 [mmol] | 4.99 |
| Genocure ITX [mmol] | 6.68 |
| Initiator Summe [mmol] | 11.67 |
| Mischung 1 [mmol] | 101.39 |
| Verhältnis: Mischung 1 : Photoinitiator [mmol:mmol] | 8.77 |
| Minimale Trocknungsenergie [mJ/cm$^2$] | 400 |

Tabelle 15

| (Eigenschaften der verwendeten Ruß-Typen) | | | | | |
|---|---|---|---|---|---|
| | Korngröße [nm] | Öladsorption Pulv. DBP [cc/100g] | Oberfläche [m$^2$/g] | pH-Wert | Flüchtiger Anteil bei 950°C [%] |
| Methode | | ASTM D2414, DIN 53601 | ASTM D 5816 | ISO 787-9 | DIN 53552 |
| Ruß, der das Verhalten im Lagertest stabilisiert | | | | | |
| Regal 250 | 34 | 46 | 55 | Keine Angaben | Keine Angaben |
| Special black 250 | 56 | 44 | 40 | 3.1 | 2 |

(fortgesetzt)

| (Eigenschaften der verwendeten Ruß-Typen) | | | | | |
|---|---|---|---|---|---|
| | Korngröße [nm] | Öladsorption Pulv. DBP [cc/100g] | Oberfläche [$m^2/g$] | pH-Wert | Flüchtiger Anteil bei 950°C [%] |
| Methode | | ASTM D2414, DIN 53601 | ASTM D 5816 | ISO 787-9 | DIN 53552 |
| Ruß, der das Verhalten im Lagertest stabilisiert | | | | | |
| Special black 350 | 31 | 45 | 65 | 3.5 | 2.2 |
| Special black 100 | 50 | 94 | 30 | 3.3 | 2.2 |
| Ruß, der das Verhalten im Lagertest negativ beeinflusst | | | | | |
| Regal 660 | 24 | 65 | 112 | >4 | >2.5 |
| Regal 400 | 25 | 71 | 96 | >4 | >2.5 |
| Regal 330 | 25 | 65 | 94 | >4 | >2.5 |

Tabelle 16

| (Für die angestrebten UV-härtbaren InkJet-Tinten nicht geeignetes Mahlgut (Viskosität und Partikelgröße steigt innerhalb von 2 Wochen zu stark an)) | | | | | | | | |
|---|---|---|---|---|---|---|---|---|
| Mahlgut* | B18 | B19 | B13 | B14 | B14.1 | B14.2 | B381 | B41 |
| | | | | | | | | |
| InkJet Black Dispersion | | | | | | | | |
| Monomer Acrylat | 53 | 52 | 53 | 52 | 50.5 | 45.5 | 61 | 48.5 |
| Oligomer Acrylat | 20 | 20 | 20 | 20 | 20 | 20 | 10 | 20 |
| Stabilisator | 1 | 1 | 1 | 1 | 1 | 1 | 1 | 1 |
| | | | | | | | | |
| Solsperse 24000 | | | | | | | | 10 |
| Solsperse 39000 | 5.5 | 6.5 | 5.5 | 6.5 | 8 | 13 | | |
| | | | | | | | | |
| Solsperse 5000 | 0.5 | 0.5 | 0.5 | 0.5 | 0.5 | 0.5 | | 0.5 |
| Disperbyk 2155 | | | | | | | 8 | |
| Regal 660R | | | 20 | 20 | 20 | 20 | 20 | 20 |
| Regal 330R | 20 | 20 | | | | | | |
| Total | 100 | 100 | 100 | 100 | 100 | 100 | 100 | 100 |
| Start | | | | | | | | |
| Partikelgröße [nm] | 122 | 116 | 98 | 100 | 101 | 136 | 120 | 112 |
| Viskosität [mPas] | 75.2 | 76.3 | 153.0 | 99.6 | 99.3 | 132.4 | 127.0 | 109.0 |
| Nach 2 Wochen bei 50°C | | | | | | | | |
| Partikelgröße [nm] | - | - | - | - | - | - | - | - |
| Viskosität [mPas] | 440 | 188 | > 2000 | > 2000 | 149.7 | > 2000 | >2000 | >2000 |
| * Anmerkung: Das Mahlgut wurde jeweils bei 50°C bis zum Eintritt der Homogenität gemischt. | | | | | | | | |

Tabelle 17

| Für UV-härtbare InkJet-Tinten geeignetes Mahlgut** (sowohl Viskosität als auch Partikelgröße blieben im Wesentlichen konstant)) | | | | |
|---|---|---|---|---|
| Mahlgut* | B7 | B71 | B261 | B42 |
| InkJet Black Dispersion | | | | |
| Monomer Acrylat | 54.5 | 54 | 52 | 52 |
| Oligomer Acrylat | 21 | 20.5 | 23.5 | 20.5 |
| Genorad 16 | 1 | 1 | 1 | 1 |
| Solsperse 39000 | 3 | 4 | 3 | 5.5 |
| Solsperse 5000 | 0.5 | 0.5 | 0.5 | 1 |
| Regal 250R (cabot) | 20 | 20 | | |
| Spezial Schwarz 250 (Evonik) | | | 20 | |
| Spezial Schwarz 350 (Evonik | | | | 20 |
| Total | 100 | 100 | 100 | 100 |
| Start | | | | |
| Partikelgröße [nm] | 109 | 108 | 128 | 143 |
| Viskosität [mPas] | 44.8 | 44.5 | 37.9 | 50.1 |
| Nach 2 Wochen bei | 50°C | 50°C | 60°C | 50°C |
| Partikelgröße [nm] | 131 | 138 | 126 | 138 |
| Viskosität [mPas] | 42.6 | 44.5 | 36.0 | 52.2 |
| Nach 4 Wochen bei | 50°C | 50°C | 60°C | 60°C |
| Partikelgröße [nm] | 158 | 109 | 121 | 140 |
| Viskosität [mPas] | 101.3 | 53.2 | 35.8 | 52.8 |
| Anmerkungen:<br>* Das Mahlgut wurde jeweils bei 50°C bis zum Eintritt der Homogenität gemischt.<br>**Definition von "geeignetem" Mahlgut: Falls die phys. Daten von einem Mahlgut (20% Ruß- bzw. Pigmentgehalt) nach zwei Wochen bei 50°C weniger als 15% sich verändern ist das Mahlgut für UV-härtbare InkJet-Tinte geeignet. | | | | |

Anlage 1

Liste der erfindungsgemäß verwendeten Acrylat-Monomere

(Handelsname, chemische Bezeichnung, Abkürzung, Strukturformel)

o Miramer 220 : Tripropylenglycoldiacrylate, TPGDA

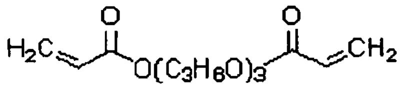

o Miramer 600 : Dipentaerythritolhexaacrylate, DPHA

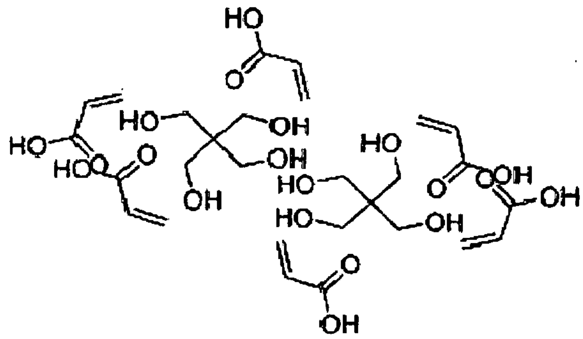

o Miramer 120 : Lauryl acrylate, LA

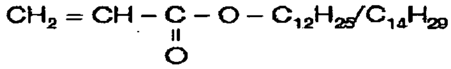

$C_{15}H_{28}O_2/C_{17}H_{32}O_2$

o Miramer 216 : Neopentylglycol Propoxylated, NPG(PO) 2 DA

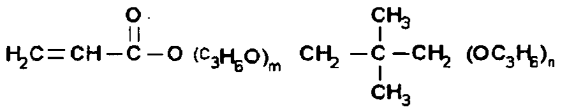

m + n ~ 2

o Miramer 222 : Dipropylene glycol diacrylate, DPGDA

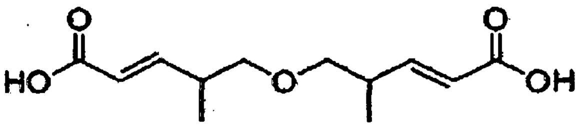

o Miramer 3130 : Ethoxylated Trimethylolpropanetriacrylate, TMP(EO) 3 TA

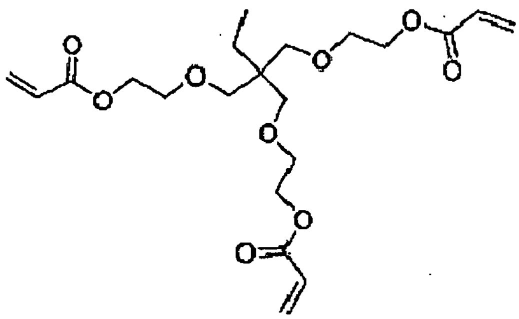

o Miramer 2301 : Bisphenol A 30 Mole Ethoxylated Dimethacrylate, BPA(EO) 30 DMA.

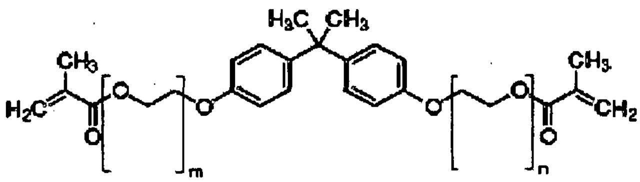

o Miramer 300 : Trimethylolpropanetriacrylate, TMPTA

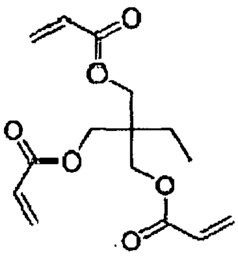

o Miramer 280 : Polyethyleneglycol 400 diacrylate, PEG400DA

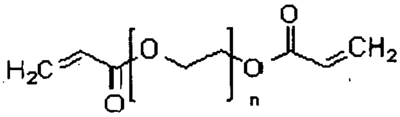

o Miramer 130 : Isodecyl acrylate, IDA

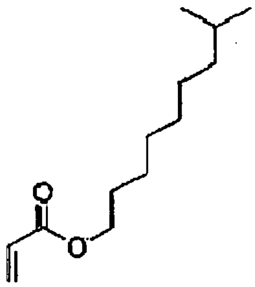

o Miramer 140: Ethylene glycol phenyl ether acrylate, PH(EO)A

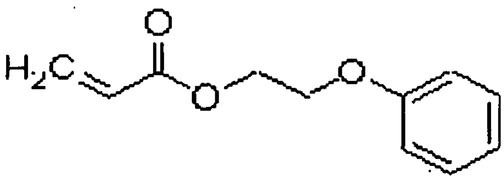

o Miramer 164: Ethoxylated Nonylphenol Acrylate, NP(EO)4A

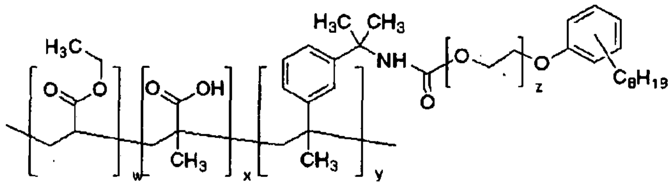

Anlage 2

Erfindungsgemäß herangezogene Photoinitiatoren

(Handelsname, Strukturformel, chemischer Name)

| | |
|---|---|
| 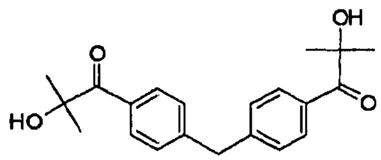 | 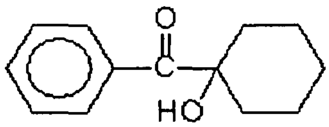 |
| Irgacure 127 : 2-Hydroxy-1-{4-[4-(2-hydroxy-2-methyl-propionyl)-benzyl]-phenyl}-2-methyl-propan-1-on (340.4g.mol$^{-1}$) | Irgacure 184 : 1-Hydroxycyclohexylphenylketon (204,3 g.mol$^{-1}$) |
| 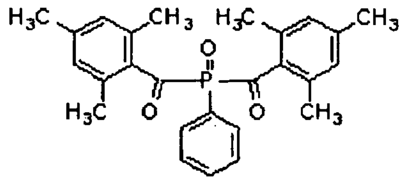 | 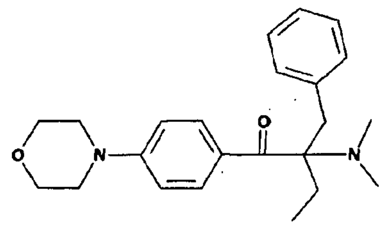 |
| Irqacure 819 : Phosphineoxid, phenylbis 2,4,6-trimethylbenzoyl) (418,5 g.mol$^{-1}$). Main component of Irqacure 2022, 360, 2022 | Irgacure 369 : 2-Benzyl-2-dimethylamino-1-(4-morpholinophenyl)-butanon-1 (366,5g.mol$^{-1}$) |
| 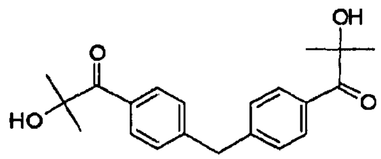 | 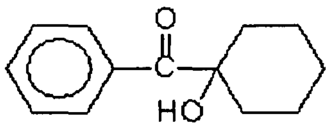 |
| 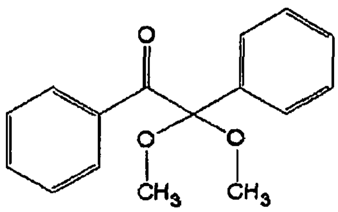 | 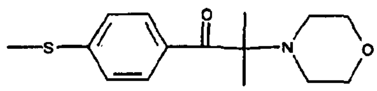 |
| Irgacure 651 : 2,2-Dimethoxy-2-Phenylacetophenon (256g.mol$^{-1}$) | Irgacure 907 : 2-Methyl-1[4-(methylthio) phenyl]-2-morpholinopropan-1-on (279,4g.mol$^{-1}$) |
| 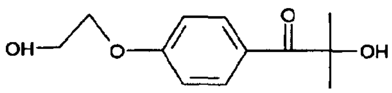 | 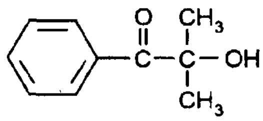 |
| Irgacure 2959 : 1-[4-(2-Hydroxyethoxy) -phenyl]-1-hydroxy-2-methyl-1-propan-1-on (224,3 g.mol$^{-1}$) | Darocur 1173 : 2-Hydroxy-2-methyl-1-phenylpropan-1-on (164,2 g.mol$^{-1}$) |
| 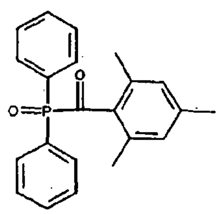 | 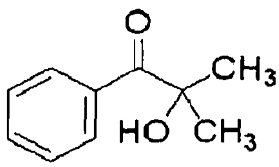 |
| Double Cure TPO : 2,4,6-Trimethyl benzoyl-diphenyl-phosphinoxid (348.37g.mol$^{-1}$) | Genocure DHMA: 2-Hydroxy-2-methyl-1-phenyl-1-propanon (164,2 g.mol$^{-1}$) |
| 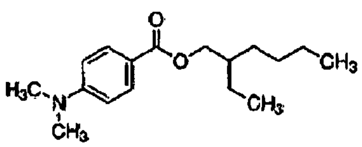 | 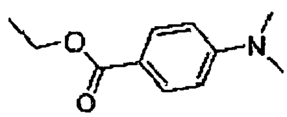 |

(fortgesetzt)

| | |
|---|---|
| Genocure EHA : 2-ethylhexyl 4-methylamino-benzoat (277,4 g.mol$^{-1}$) | Genocure EPD : Ethyl-4-Dimethylamino-benzoat Benzoyldiphenylphosphinoxid (193,2 g.mol$^{-1}$) |
| 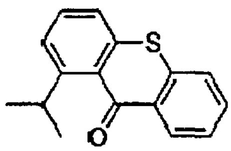 | 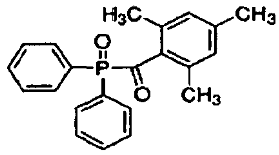 |
| Genocure ITX : Isopropylthioxanthon (254,3g.mol$^{-1}$) | Genocure LTM : Trimethyl (348,4g.mol$^{-1}$) |
| 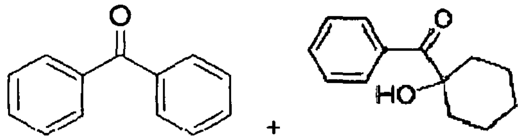 | 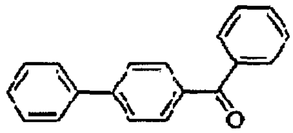 |
| 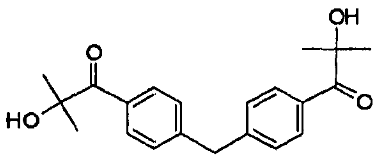 | 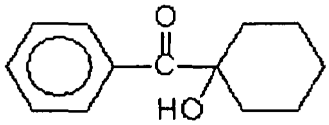 |
| Genocure LBC : 1-Hydroxycyclohexyl Phenylketon + Benzophenon (182,138 g.mol$^{-1}$) | Genocure PBZ : 4-Phenylbenzophenon (259 g.mol$^{-1}$) |
| | 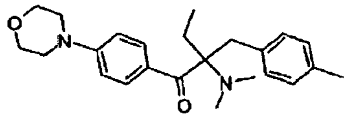 |
| Irgacure 754 Mixture of Oxy-phenyl-acetic acid 2-[2-oxo-2-phenyl-acetoxy-ethoxy]-ethylester and Oxy-phenyl-acetic acid 2-[2-hydroxy-ethoxy]-ethylester | Irgacure 379 : 2-Dimethylamino 2-(4-methyl-benzyl)-1-(4-morpholin-4-yl-phenyl)-butan-1-on (380.5g.mol$^{-1}$) |
| 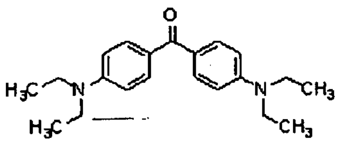 | 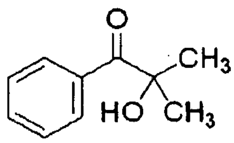 |
| Double Cure EMK : 4,4'-Bis(diethylamino) benzophenon (324,5 g.mol$^{-1}$) | Double Cure 173 : 2-Hydroxy-2-methylpropiophenon (164,2 g.mol$^{-1}$) |
| 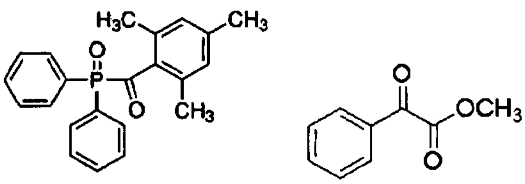 | 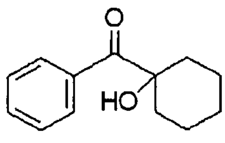 |
| Double Cure TPO-L 75 % Diphenyl (2,4,6-trimethylbenzoyl) phosphinoxid (324,5g.mol$^{-1}$) + 25% Methylbenzoylformat (164, 1g.mol$^{-1}$) | Double Cure 184 : 1-Hydroxycyclohexylphenylketon (204,26 g.mol$^{-1}$) |

## Patentansprüche

1. UV-härtbare Tinte, insbesondere UV-härtbare InkJet-Tinte, auf Acrylatbasis mit einem Gehalt an Pigment(en), radikalischen Photoinitiatoren, Dispergiermittel(n) und gegebenenfalls weiteren Additiven, **dadurch gekennzeichnet, dass** sie mindestens zwei radikalische Photoinitiatoren vom Norrish Typ I und mindestens ein radikalisch

härtbares Monomer in Form eines polyfunktionellen alkoxylierten und/oder polyalkoxylierten Acrylatmonomers, das ein oder mehrere Di- und/oder Tri-Acrylate umfasst, enthält, wobei das Mol-Verhältnis aller Acrylate zu allen Initiatoren 7:1 bis 19:1, insbesondere 7:1 bis 15:1, beträgt, und sie eine Viskosität (gemessen mit dem Bohlin-Gerät bei 45°C) von 5 bis 15 mPa.s, aufweist und wobei mindestens einer der radikalischen Photoinitiatoren des Norrish Typs I ein bifunktioneller Initiator, der zwei potentielle Spaltungsstellen enthält, ist, und wobei das polyfunktionelle alkoxylierte und/oder polyalkoxylierte Acrylatmonomer in Form von Tripropylenglykoldiacrylat, Dipentaerythritolhexaacrylat, propoxyliertem Neopentylglykol-diacrylat, Dipropylenglykoldiacrylat, ethoxyliertem Trimethylolpropantriacrylat, Trimethylolpropantriacrylat, und/oder Ethylenglykolphenyletheracrylat, vorliegt.

2. UV-härtbare Tinte nach Anspruch 1, **dadurch gekennzeichnet, dass** sich die mindestens zwei radikalischen Photoinitiatoren (A) und (B) in ihren Absorptionsmaxima unterscheiden, wobei insbesondere der Abstand zwischen den Absorptionsmaxima der mindestens zwei radikalischen Photoinitiatoren (A) und (B) mindestens etwa 20 nm, insbesondere mindestens etwa 35 nm, beträgt.

3. UV-härtbare Tinte nach Anspruch 1 oder 2, **dadurch gekennzeichnet, dass** das Absorptionsmaximum des radikalischen Photoinitiators (A) unter 290 nm und das des radikalischen Photoinitiators (B) über 290 nm liegt.

4. UV-härtbare Tinte nach mindestens einem der vorhergehenden Ansprüche, **dadurch gekennzeichnet, dass** das Mol-Verhältnis des radikalischen Photoinitiators (A) zum radikalischen Photoinitiator (B) zwischen etwa 0,7:1 und 1:0,7, insbesondere bei etwa 1:1, liegt.

5. UV-härtbare Tinte nach mindestens einem der vorhergehenden Ansprüche, **dadurch gekennzeichnet, dass** mindestens einer der Photoinitiatoren des Norrish Typs I ausgewählt wird unter 2-Hydroxy-1-{4-[4-(2-hydroxy-2-methyl-propionyl)-ben-zyl]-phenyl}-2-methyl-propan-1-on (Irgacure 127), 1-Hydroxycyclohexyl-phenyl-keton (Irgacure 184), Phenyl-bis-2,4,6-trimethylbenzoyl-phosphin-oxid (Irgacure 819), 2-Benzyl-2-dimethylamino-1-(4-morpholino-phenyl)-bu-tanon-1 (Irgacure 369), 2,4,6-Trimethylben-zoyldiphenyl-phosphinoxid (Doublecure TPO), 2-Dimethylamino-2-(4-methylbenzyl)-1-(4-morpholin-4-yl-phenyl)-butan-1-on (Irgacure 379).

6. UV-härtbare Tinte nach mindestens einem der vorhergehenden Ansprüche, **dadurch gekennzeichnet, dass** eine Kombination ausgewählt wird unter: **1.** 2-Hydroxy-1-{4-[4-(2-hydroxy-2-methyl-propionyl)-benzyl]-phenyl}-2-methyl-propan-1-on (Irgacure 127)/ 2-Dimethylamino-2-(4-methyl-benzyl)-1-(4-morpho-lin-4-yl-phenyl)-butan-1I-on (Irgacure 379), **2.** 2-Hydroxy-1-{4-[4-(2-hydroxy-2-methyl-propionyl)-benzyl]-phenyl}-2-methyl-propan-1-on (Irgacure 127)/ Phenylbis 2,4,6-trimethylbenzoyl-phosphinoxid (Irgacure 819), **3.** 2-Hydroxy-1-{4-[4-(2-hydroxy-2-methyl-propionyl)-benzyl]-phe-nyl}-2-methyl-propan-1-on (Irgacure 127)/ 2-Benzyl-2-dimethylamino-1-(4-morpholino-phenyl)-butanon-1 (Irgacure 369).

7. UV-härtbare Tinte nach mindestens einem der vorhergehenden Ansprüche, **dadurch gekennzeichnet, dass** neben dem polyfunktionellen alkoxylierten und/oder polyalkoxylierten Acrylatmonomer mindestens ein monofunktionelles alkoxyliertes und/oder polyalkoxyliertes Acrylatmonomer und/oder ein nichtalkoxyliertes und nicht-polyalkoxyliertes Acrylatmonomer vorliegt.

8. UV-härtbare Tinte nach mindestens einem der vorhergehenden Ansprüche, **dadurch gekennzeichnet, dass** neben dem radikalisch härtbaren Monomer ein radikalisch härtbares Oligomer niedriger Viskosität, insbesondere in Form eines Polyester- oder Polyether-Acrylates, vorliegt.

9. UV-härtbare Tinte nach Anspruch 8, **dadurch gekennzeichnet, dass** auf 1 Gewichtsteil radikalisch härtbares Oligomer etwa 10 bis 100 Gewichtsteile Acrylatmonomer, insbesondere etwa 30 bis 50 Gewichtsteile entfallen.

10. UV-härtbare Tinte nach mindestens einem der vorhergehenden Ansprüche, **dadurch gekennzeichnet, dass** das Pigment in Form von Ruß, eines Quinacridons, eines Benzimidazolons, eines Isoindolinons und/oder eines Phthalocyanins, vorliegt.

11. UV-härtbare Tinte nach mindestens einem der vorhergehenden Ansprüche, **dadurch gekennzeichnet, dass** das Dispergiermittel in Form von Solsperse® 24000, Solsperse® 39000, Solsperse® 35000, Solsperse® 32000 und/oder Solsperse® 76400 (Firma Lubrizol) vorliegt.

12. UV-härtbare Tinte nach mindestens einem der vorhergehenden Ansprüche, **dadurch gekennzeichnet, dass** sie einen Synergisten in Form von Solsperse® 5000, Solsperse® 12000 und/oder Solsperse® 22000 (Firma Lubrizol)

enthält.

**13.** UV-härtbare -Tinte nach mindestens einem der vorhergehenden Ansprüche, **dadurch gekennzeichnet, dass** sie eine Viskosität (gemessen mit dem Bohlin-Gerät bei 45°C) von 7 bis 12 mPa.s, insbesondere von 10 bis 11 mPa.s, aufweist.

**14.** UV-härtbare Tinte nach mindestens einem der vorhergehenden Ansprüche, **dadurch gekennzeichnet, dass** die Oberflächenspannung (Ring) zwischen etwa 20 und 35 mN/mm, insbesondere zwischen 20 und 26 mN liegt.

**15.** UV-härtbare Tinte nach mindestens einem der vorhergehenden Ansprüche, **dadurch gekennzeichnet, dass** diese gelösten Sauerstoff enthält, wobei der Gehalt an Sauerstoff durch den Sauerstoff-Partialdruck einer aufgelagerten Atmosphäre aufrechterhalten wird.

**16.** Verfahren zur Herstellung einer UV-härtbaren Tinte, insbesondere InkJet-Tinte nach mindestens einem der vorhergehenden Ansprüche 1 bis 15, **dadurch gekennzeichnet, dass**

> **1.** ein Mahlgut bzw. eine Tintenbasis dadurch hergestellt wird, indem ein oder mehrere radikalisch härtbare Monomere in Form eines polyfunktionellen alkoxylierten und/oder polyalkoxylierten Acrylmonomers, die ein oder mehrere Di- und/oder Triacrylate umfassen, mit ein oder mehreren Pigmenten und Dispergiermitteln, insbesondere gegebenenfalls zusätzlich mit Synergisten, Stabilisatoren und weiteren Additiven, in einer Hochleistungsmühle, insbesondere in einer Perlenmühle, so lange gemahlen werden, bis sich eine konstante Viskosität und/oder konstante Partikelgröße eingestellt hat,
> **2.** das erhaltene Mahlgut mit weiteren Acrylat-Monomeren sowie den radikalischen Photoinitiatoren in Form des Norrish Typs I entsprechend den Definitionen der vorausgehenden Ansprüche 1 bis 15 und gegebenenfalls weiteren Additiven entsprechend den Angaben nach mindestens einem der vorhergehenden Ansprüche 1 bis 15 gemischt wird.

**17.** Verfahren nach Anspruch 16, **dadurch gekennzeichnet, dass** das Verhältnis von Dispergiermittel zu Synergist derartig eingestellt ist, dass auf ein Gewichtsteil Synergist bis zu etwa 30 Gewichtsteile Dispergiermittel entfallen, insbesondere etwa 5 bis 10 Gewichtsteile.

## Claims

**1.** A UV-curable acrylate-based ink, particularly a UV-curable inkjet ink, containing pigment(s), radical photoinitiators, dispersant(s) and optionally further additives, **characterised in that** it contains at least two radical photoinitiators of Norrish Type I and at least one radically curable monomer in the form of a polyfunctional, alkoxylated and/or polyalkoxylated acrylate monomer, which includes one or more di- and/or tri-acrylates, wherein the molar ratio of all acrylates to all initiators is 7:1 to 19:1, particularly 7:1 to 15:1, and it has a viscosity (measured with the Bohlin apparatus at 45°C) of 5 to 15 mPa.s and wherein at least one of the radical photoinitiators of Norrish Type I is a bifunctional initiator, which includes two potential cleavage sites, and wherein the polyfunctional alkoxylated and/or polyalkoxylated acrylate monomer is present in the form of tripropylene glycol diacrylate, dipentaerythritol hexaacrylate, propoxylated neopentyl glycol diacrylate, dipropylene glycol diacrylate, ethoxylated trimethylolpropane triacrylate, trimethylolpropane triacylate, and/or ethylene glycol phenyl ether acrylate.

**2.** A UV-curable ink as claimed in Claim 1, **characterised in that** the at least two radical photoinitiators (A) and (B) differ in their absorption maxima wherein, in particular, the distance between the absorption maxima of the at least two radical photoinitiators (A) and (B) is at least about 20 nm, in particular at least about 35 nm.

**3.** A UV-curable ink as claimed in Claim 1 or 2, **characterised in that** the absorption maximum of the radical photoinitiator (A) lies below 290 nm and that of the radical photoinitiator (B) lies above 290 nm.

**4.** A UV-curable ink as claimed in at least one of the preceding claims, **characterised in that** the molar ratio of the radical photoinitiator (A) to the radical photoinitiator (B) lies between about 0.7:1 and 1:0.7 and is, in particular, about 1:1.

**5.** A UV-curable ink as claimed in at least one of the preceding claims, **characterised in that** at least one of the photoinitiators of Norrish Type I is selected from 2-hydroxy-1-{4-[4-(2-hydroxy-2-methyl-propionyl)-benzyl]-phenyl}-2-methyl-propane-1-one (Irgacure 127), 1-hydroxycyclohexyl-phenyl-ketone (Irgacure 184), phenylbis-2,4,6-trimethylbenzoyl-phosphine-oxide (Irgacure 819), 2-benzyl-2-dimethylamino-1-(4-morpholino-phenyl)-bu-tanone-1 (Irgacure 369), 2,4,6-trimethylben-zoyl-diphenyl-phosphine oxide (Doublecure TPO), 2-dimethylamino-2-(4-methyl-benzyl)-1-(4-morpholine-4-yl-phenyl)-butane-1-one (Irgacure 379).

**6.** A UV-curable ink as claimed in at least one of the preceding claims, **characterised in that** a combination is selected from: 1. 2-hydroxy-1-{4-[4-(2-hydroxy-2-methylpropionyl)-benzyl]-phenyl}-2-methyl-propane-1-one (Irgacure 127)/ 2-dimethylamino-2-(4-methyl-benzyl)-1-(4-morpho-line-4-yl-phenyl)-butane-1-one (Irgacure 379), **2.** 2-hydroxy-1-[4-[4-(2-hydroxy-2-methyl-propionyl)-benzyl]-phenyl}-2-methyl-propane-1-one (Irgacure 127)/ phenyl bis 2,4,6-trimethylbenzoyl-phosphine oxide (Irgacure 819), **3.** 2-hydroxy-1-{4-[4-(2-hydroxy-2-methyl-propionyl)-ben-zyl]-phe-nyl}-2-methyl-propane-1-one (Irgacure 127)/ 2-benzyl-2-dimethylamino-1-(4-morpholino-phenyl)-butanone-1 (Irgacure 369).

**7.** A UV-curable ink as claimed in at least one of the preceding claims, characterised that in addition to the polyfunctional alkoxylated and/or polyalkoxylated acrylate monomer, at least one monofunctional alkoxylated and/or polyalkoxylated acrylate monomer and/or a non-alkoxylated and non-polyalkoxylated acrylate monomer is present.

**8.** A UV-curable ink as claimed in at least one of the preceding claims, **characterised in that** in addition to the radically curable monomer, a radically curable oligomer of low viscosity, particularly in the form of a polyester- or polyether-acrylate, is present.

**9.** A UV-curable ink as claimed in Claim 8, **characterised in that** about 10 to 100 parts by weight acrylate monomer, particularly about 30 to 50 parts by weight, are allotted to one part by weight radically curable oligomer.

**10.** A UV-curable ink as claimed in at least one of the preceding claims, **characterised in that** the pigment is present in the form of carbon black, a quinacridone, a benzimidazolone, an isoindolinone and/or a phthalocyanine.

**11.** A UV-curable ink as claimed in at least one of the preceding claims, **characterised in that** the dispersant is present in the form of Solsperse® 24000, Solsperse® 39000, Solsperse® 35000, Solsperse® 32000 and/or Solsperse® 76400 (Lubrizol company).

**12.** A UV-curable ink as claimed in at least one of the preceding claims, **characterised in that** it includes a synergist in the form of Solsperse® 5000, Solsperse® 12000 and/or Solsperse ® 22000 (Lubrizol company).

**13.** A UV-curable ink as claimed in at least one of the preceding claims, **characterised in that** it has a viscosity (measured with the Bohlin apparatus at 45°C) of 7 to 12 mPa.s, particularly 10 to 11 mPa.s.

**14.** A UV-curable ink as claimed in at least one of the preceding claims, **characterised in that** the surface tension (ring) lies between about 20 and 35 mN/mm, particularly between 20 and 26 mN.

**15.** A UV-curable ink as claimed in at least one of the preceding claims, **characterised in that** it contains dissolved oxygen, wherein the oxygen content is maintained by the oxygen partial pressure of a superimposed atmosphere.

**16.** A method of producing a UV-curable ink, particularly an inkjet ink, as claimed in at least one of the preceding Claims 1 to 15, **characterised in that**

**1.** a ground material or an ink base is produced by one or more radically curable monomers in the form of a polyfunctional alkoxylated and/or polyalkoxylated acryl monomer, which include one or more di- and/or triacrylates, being ground with one or more pigments and dispersants, particularly optionally additionally with synergists, stabilisers and further additives, in a high speed grinder, particularly in a bead grinder, until a constant viscosity and/or constant particle size has been reached,
**2.** the ground material obtained is mixed with further acrylate monomers and the radical photoinitiators in the form of Norrish Type I corresponding to the definitions in the preceding Claims 1 to 15 and optionally further additives in accordance with the information in at least one of the preceding Claims 1 to 15.

**17.** A method as claimed in Claim 16, **characterised in that** the ratio of dispersant to synergist is set so that up to about 30 parts by weight, particularly about 5 to 10 parts by weight, dispersant are allotted to one part by weight synergist.

## Revendications

1. Encre durcissable par rayonnement UV, en particulier encre pour impression jet d'encre durcissable par rayonnement UV, à base d'acrylate, ayant une teneur en pigment(s), photo-initiateurs radicalaires, agent(s) dispersant(s), et le cas échéant en d'autres additifs, **caractérisée en ce qu'**elle comprend au moins deux photo-initiateurs de type I de Norrish et au moins un monomère durcissable par voie radicalaire prenant la forme d'un monomère d'acrylate alkoxylé et/ou polyalkoxylé polyfonctionnel, qui comporte un ou plusieurs di- et/ou triacrylates, le rapport molaire de tous les acrylates sur tous les initiateurs étant de 7:1 à 19:1, en particulier de 7:1 à 15:1, et **en ce qu'**elle comprend une viscosité (mesurée avec un rhéomètre de Bohlin à 45°C) de 5 à 15 mPa.s, et dans laquelle au moins l'un des photo-initiateurs radicalaires de type I de Norrish est un initiateur bifonctionnel comprenant deux sites de clivage potentiels, et dans lequel le monomère d'acrylate alkoxylé et/ou polyalkoxylé polyfonctionnel se présente sous forme de diacrylate de tripropylèneglycol, d'hexaacrylate de dipentaérythritol, de diacrylate de néopentylglycol propoxylé, de diacrylate de dipropylèneglycol, de triacrylate de triméthylolpropane éthoxylé, de triacrylate de triméthylolpropane, et/ou d'acrylate d'éther phénylique d'éthylèneglycol.

2. Encre durcissable par rayonnement UV selon la revendication 1, **caractérisée en ce que** les au moins deux photo-initiateurs radicalaires (A) et (B) se distinguent au niveau de leurs maxima d'absorption, la distance entre les maxima d'absorption des au moins deux photo-initiateurs radicalaires (A) et (B) étant en particulier d'au moins 20 nm environ, en particulier d'au moins 35 nm environ.

3. Encre durcissable par rayonnement UV selon la revendication 1 ou 2, **caractérisée en ce que** le maximum d'absorption du photo-initiateur radicalaire (A) est inférieur à 290 nm et celui du photo-initiateur radicalaire (B) est supérieur à 290 nm.

4. Encre durcissable par rayonnement UV selon au moins une des revendications précédentes, **caractérisée en ce que** le rapport molaire du photo-initiateur radicalaire (A) sur le photo-initiateur radicalaire (B) se situe entre 0,7:1 et 1:0,7, notamment vers environ 1:1.

5. Encre durcissable par rayonnement UV selon au moins une des revendications précédentes, **caractérisée en ce qu'**au moins un des photo-initiateurs de type I de Norrish est choisi parmi la 2-hydroxy-1-{4-[4-(2-hydroxy-2-méthylpropionyl)-benzyl]-phényl}-2-méthylpropane-1-one (Irgacure 127), la 1-hydroxycyclohexylphénylcétone (Irgacure 184), l'oxyde de phényl-bis-2,4,6-triméthyl-benzoylphosphine (Irgacure 819), la 2-benzyl-2-diméthyl-amino-1-(4-morpholinophényl)-butanone-1 (Irgacure 369), l'oxyde de 2,4,6-triméthylbenzoyldiphénylphosphine (Doublecure TPO), la 2-diméthylamino-2-(4-méthylbenzyl)-1-(4-morpholine-4-ylphényl)-butane-1-one (Irgacure 379).

6. Encre durcissable par rayonnement UV selon au moins une des revendications précédentes, **caractérisée en ce que** une combinaison est choisie parmi : **1.** 2-hydroxy-1-{4-[4-(2-hydroxy-2-méthylpropionyl)-benzyl]-phényl}-2-méthylpropane-1-one (Irgacure 127)/ 2-diméthylamino-2-(4-méthyl-benzyl)-1-(4-morpholine-4-ylphényl)-butane-1-one (Irgacure 379), **2.** 2-hydroxy-1-{4-[4-(2-hydroxy-2-méthylpropionyl)-benzyl]-phényl}-2-méthylpropane-1-one (Irgacure 127)/ oxyde de phényl-bis-2,4,6-triméthyl-benzoylphosphine (Irgacure 819), **3.** 2-hydroxy-1-{4-[4-(2-hydroxy-2-méthylpropionyl)-benzyl]-phényl}-2-méthylpropane-1-one (Irgacure 127)/ 2-benzyl-2-diméthylamino-1-(4-morpholinophényl)-butanone-1 (Irgacure 369).

7. Encre durcissable par rayonnement UV selon au moins une des revendications précédentes, **caractérisée en ce qu'**elle comprend, en plus du monomère d'acrylate alkoxylé et/ou polyalkoxylé polyfonctionnel, au moins un monomère d'acrylate alkoxylé et/ou polyalkoxylé mono-fonctionnel et/ou un monomère d'acrylate non alkoxylé et/ou non polyalkoxylé.

8. Encre durcissable par rayonnement UV selon au moins une des revendications précédentes, **caractérisée en ce qu'**elle comprend, en plus du monomère durcissable par voie radicalaire, un oligomère durcissable par voie radicalaire présentant une basse viscosité, en particulier prenant la forme d'un acrylate de polyester ou de polyéther.

9. Encre durcissable par rayonnement UV selon la revendication 8, **caractérisée en ce qu'**environ 10 à 100 parties en poids de monomère d'acrylate, en particulier environ 30 à 50 parties en poids, correspondent à 1 partie en poids d'oligomère durcissable par voie radicalaire.

10. Encre durcissable par rayonnement UV selon au moins une des revendications précédentes, **caractérisée en ce que** le pigment se présente sous forme de suie, d'une quinacridone, d'une benzimidazolone, d'une iso-indolinone et/ou

d'une phtalocyanine.

**11.** Encre durcissable par rayonnement UV selon au moins une des revendications précédentes, **caractérisée en ce que** l'agent dispersant se présente sous forme de Solsperse® 24000, Solsperse® 39000, Solsperse® 35000, Solsperse® 32000 et/ou Solsperse® 76400 (Société Lubrizol).

**12.** Encre durcissable par rayonnement UV selon au moins une des revendications précédentes, **caractérisée en ce qu'**elle comprend un synergiste sous forme de Solsperse® 5000, Solsperse® 12000 et/ou Solsperse® 22000 (Société Lubrizol).

**13.** Encre durcissable par rayonnement UV selon au moins une des revendications précédentes, **caractérisée en ce qu'**elle présente une viscosité (mesurée avec un rhéomètre de Bohlin à 45°C) de 7 à 12 mPa.s, en particulier de 10 à 11 mPa.s.

**14.** Encre durcissable par rayonnement UV selon au moins une des revendications précédentes, **caractérisée en ce que** la tension superficielle (anneau) se situe entre environ 20 et 35 mN/mm, en particulier entre 20 et 26 mN.

**15.** Encre durcissable par rayonnement UV selon au moins une des revendications précédentes, **caractérisée en ce qu'**elle comprend de l'oxygène dissous, la teneur en oxygène étant maintenue par le biais de la pression partielle d'oxygène d'une atmosphère appliquée.

**16.** Procédé de fabrication d'une encre durcissable par rayonnement UV, notamment une encre pour impression jet d'encre selon au moins une des revendications précédentes 1 à 15, **caractérisé en ce que** :

**1.** un produit broyé ou une base d'encre est fabriqué en broyant un ou plusieurs monomères durcissables par voie radicalaire prenant la forme d'un monomère acrylique alkoxylé et/ou polyalkoxylé polyfonctionnel, qui comprennent un ou plusieurs di- et/ou triacrylates, avec un ou plusieurs pigments et agents dispersants, en particulier le cas échéant avec en plus des synergistes, des stabilisants et d'autres additifs, dans un broyeur haute performance, en particulier un broyeur à billes, jusqu'à ajustement d'une viscosité constante et/ou d'une taille de particule constante,
**2.** le produit broyé obtenu est mélangé avec d'autres monomères d'acrylate ainsi que des photo-initiateurs radicalaires prenant la forme du type I de Norrish conformément aux définitions des revendications antérieures 1 à 15 et, le cas échéant, d'autres additifs conformément aux indications selon au moins une des revendications précédentes 1 à 15.

**17.** Procédé selon la revendication 16, **caractérisé en ce que** le rapport de l'agent dispersant sur le synergiste est ajusté de sorte que jusqu'à 30 parties en poids d'agent dispersant, en particulier environ 5 à 10 parties en poids, correspondent à une partie en poids de synergiste.

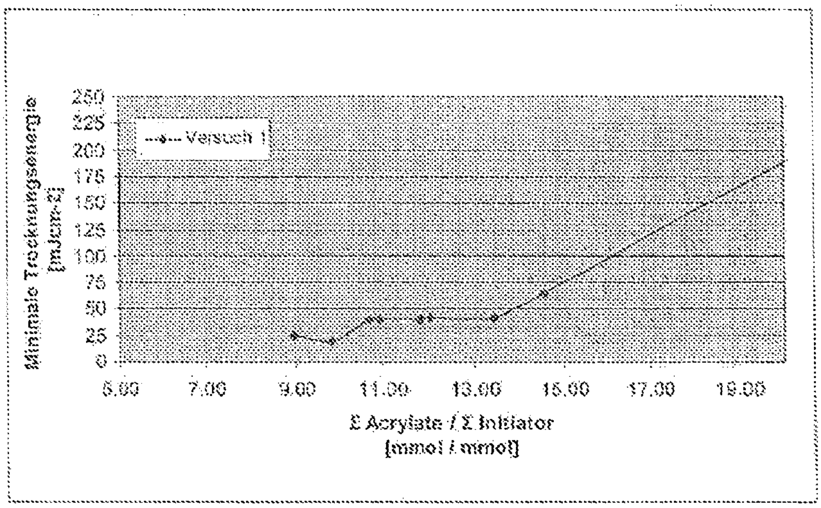


Figur 1

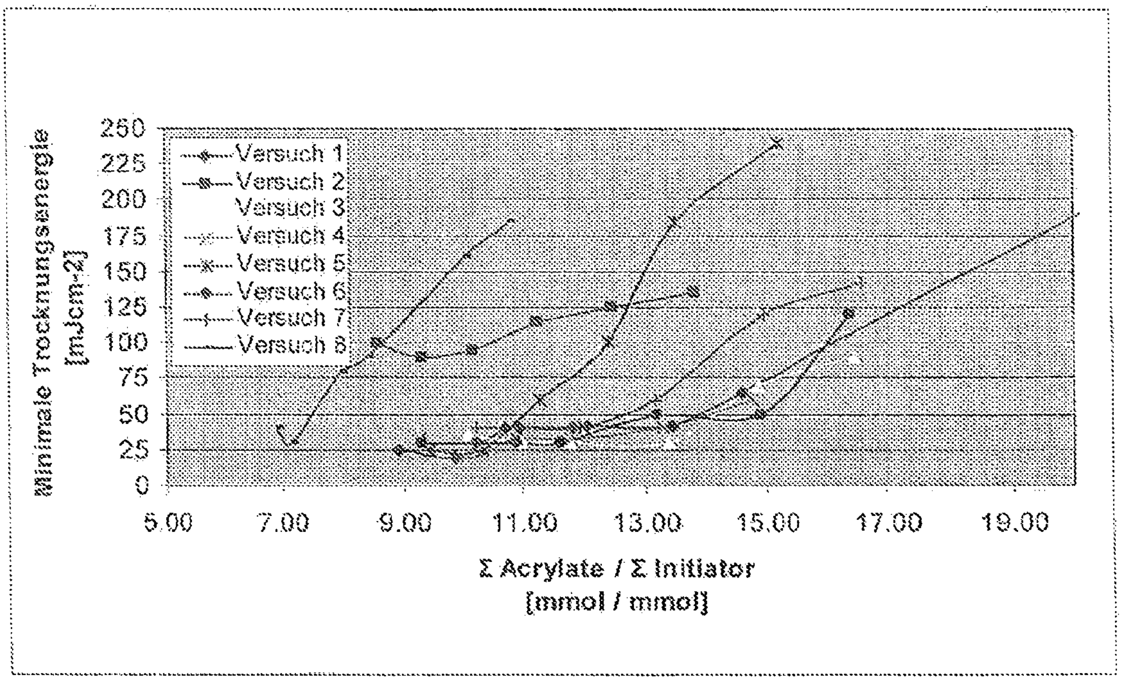


Figur 2

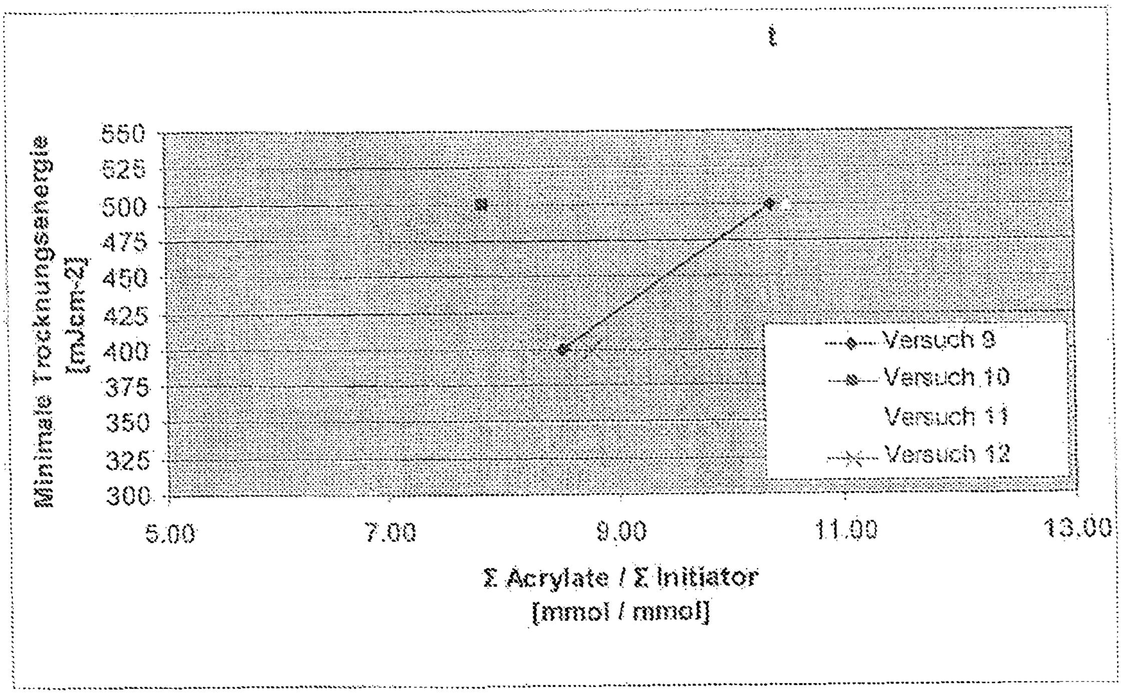


Figur 3

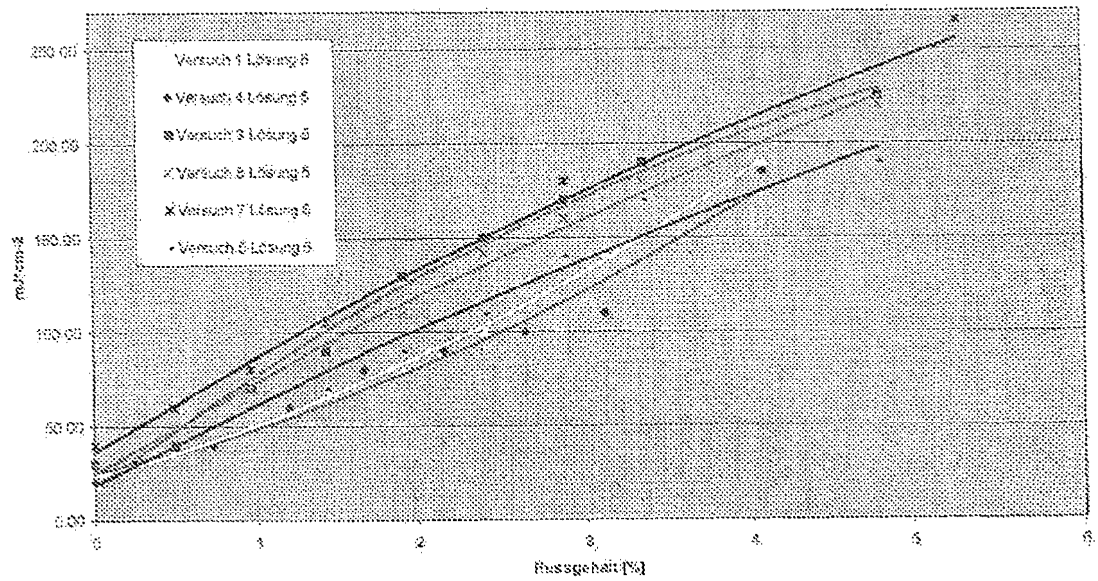


Figur 4

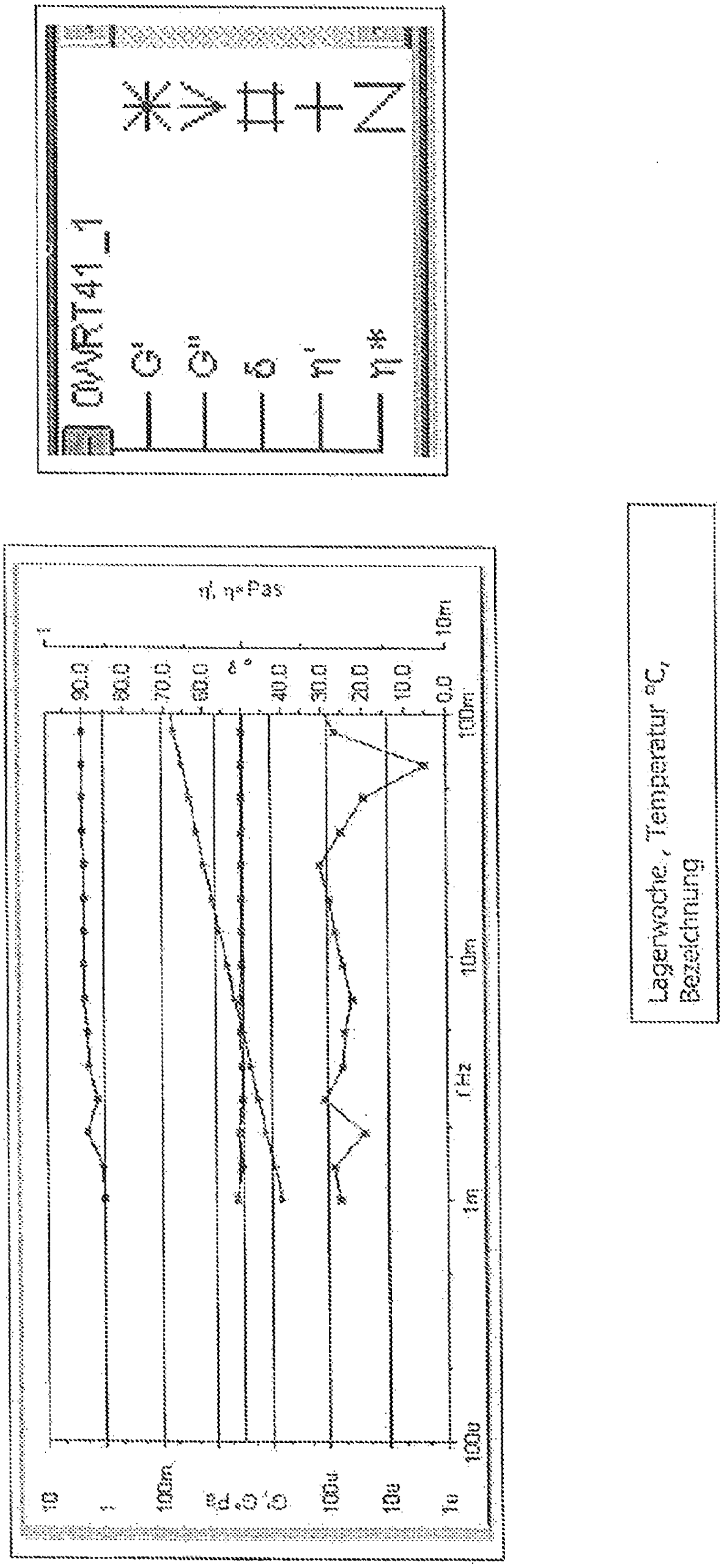
OWRT41_1
G'
G''
δ
η'
η*
η', η* Pas
G', G'' Pa
δ °
f Hz
Lagerwoche., Temperatur °C,
Bezeichnung

**Figur 5**

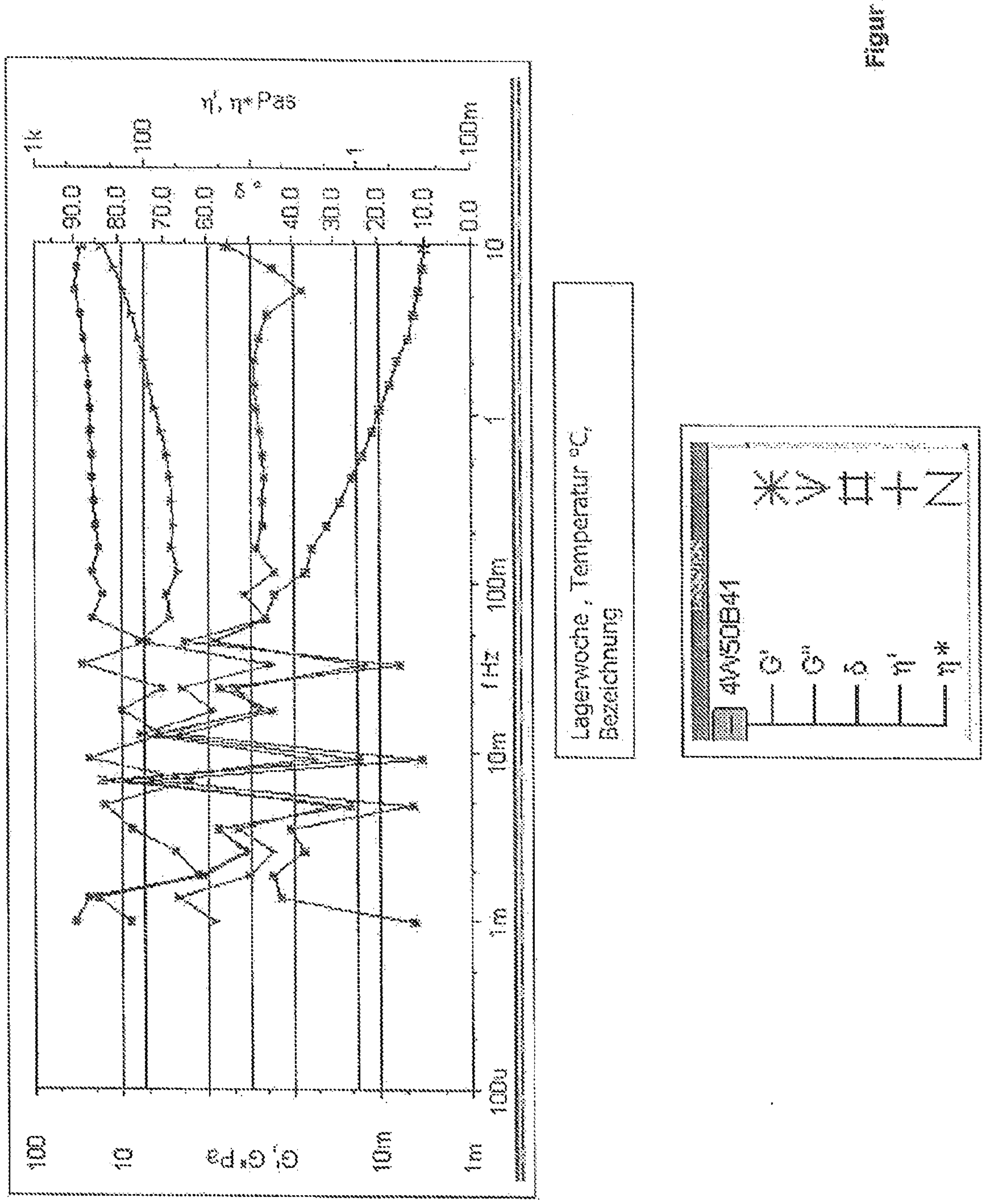
G', G* Pa
η', η* Pas
δ °
f Hz
Lagerwoche , Temperatur °C,
Bezeichnung
4A/50B41
G'
G''
δ
η'
η*

Figur 6

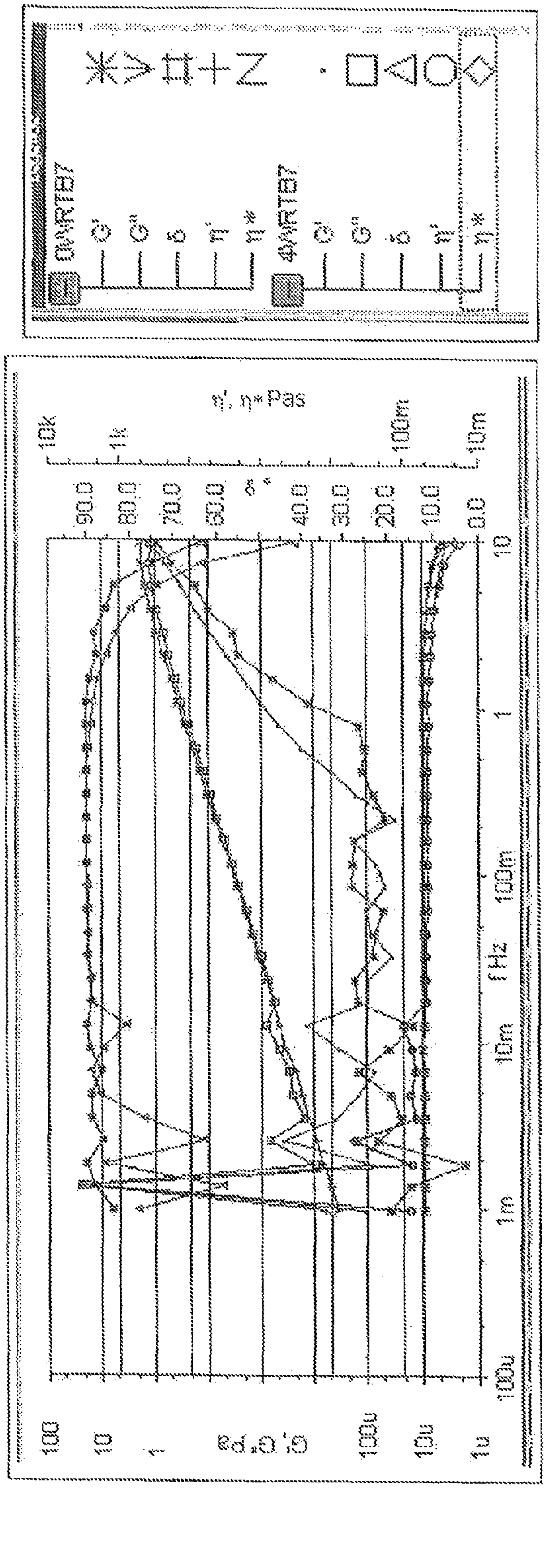


Figur 7

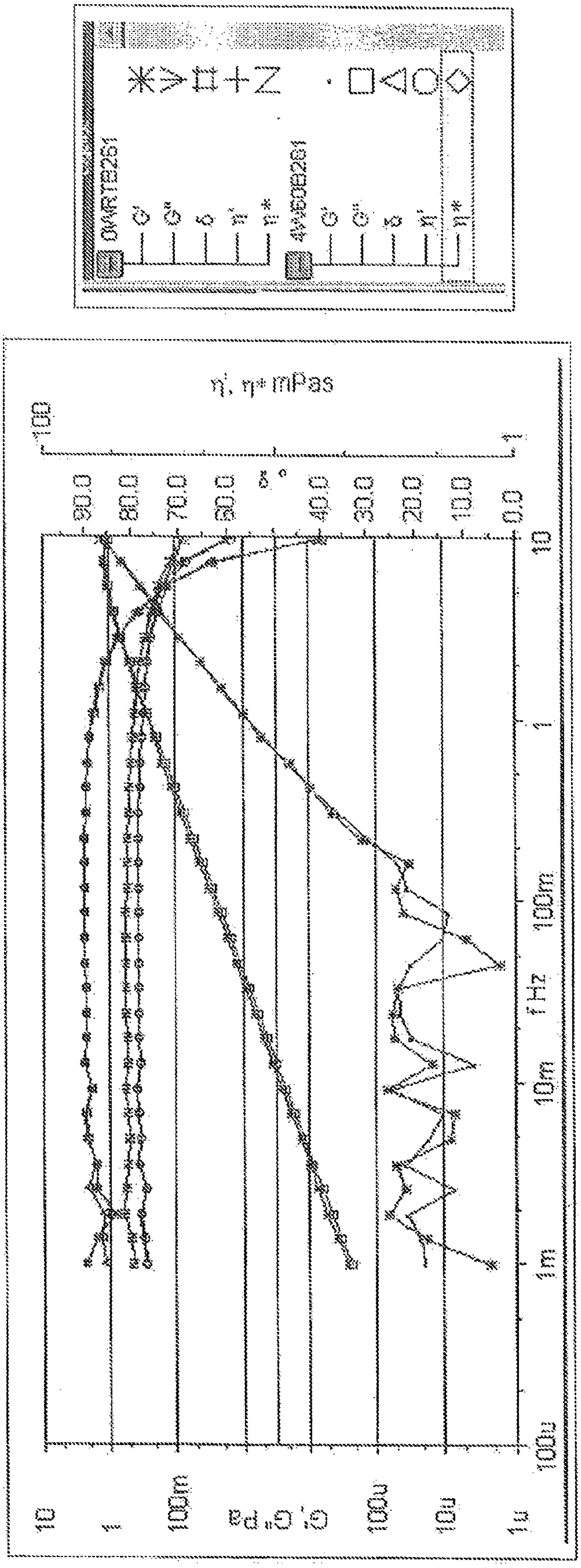


Figur 8

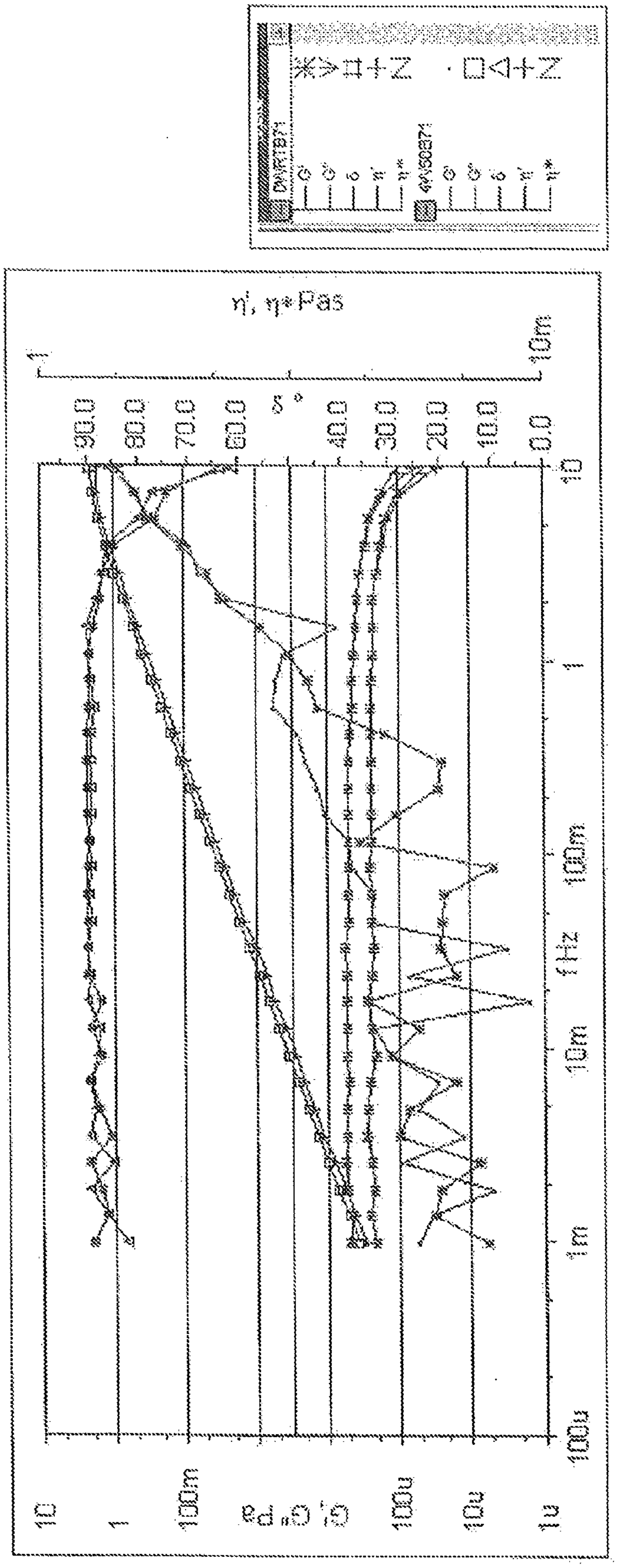
η', η* Pas
δ °
f Hz
G', G'' Pa
90.0
80.0
70.0
60.0
40.0
30.0
20.0
10.0
0.0
10
1
100m
10m
1m
100u
10u
1u

Figur 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0314403 A1
- EP 0424714 A1
- EP 0882104 B1
- EP 1593521 A
- EP 1840176 A1
- EP 2017331 A1
- EP 2053100 A1
- WO 2004106444 A1
- US 2003018230 A1


### In der Beschreibung aufgeführte Nicht-Patentliteratur


- *Main component of Irqacure*, 2022, vol. 360, 2022